# EUROPEAN PATENT APPLICATION

(11) **EP 2 753 110 A1**
(43) Date of publication of application: **09.07.2014**
(21) Application number: 12828293.6
(22) Date of filing: 18.07.2012
(51) Int. Cl.: H04W 16/10, H04W 16/16, H04W 16/32, H04W 48/16

(54) **WIRELESS COMMUNICATION SYSTEM, WIRELESS BASE STATION, AND COMMUNICATION CONTROL METHOD**

(30) Priority: 29.08.2011 JP 2011185485
(71) Applicant: NTT DOCOMO, INC., Chiyoda-ku Tokyo 100-6150 (JP)
(72) Inventor: SHIRAKABE, Masashige, Tokyo 100-6150 (JP); MORIMOTO, Akihito, Tokyo 100-6150 (JP); MIKI, Nobuhiko, Tokyo 100-6150 (JP)
(74) Representative: HOFFMANN EITLE
(86) International application number: PCT/JP2012/068186
(87) International publication number: WO 2013/031402

(57) **Abstract**

A radio communication system includes a first radio base station that forms a first cell, second radio base stations that form second cells, and mobile stations that execute radio communication with radio base stations. The first radio base station includes a radio communication section, a resource specifying section that specifies, according to a parameter that affects the amount of communication of the first radio base station or the second radio base stations, the number and placement of first resources in which the radio communication section should execute radio communication and the number and placement of second sources in which the radio communication section should stop radio communication, and a communication control section that controls the radio communication section such that the radio communication section executes radio communication in the first resources specified by the resource specifying section, and such that the radio communication section stops radio communication in the second resources specified by the resource specifying section.

## Description

### Technical Field

The present invention relates to radio communication systems, radio base stations, and communication control methods.

### Background Art

In these years, heterogeneous networks (HetNets) have been proposed, in which a plurality of types of radio base stations having different transmission powers (transmission capabilities), such as a macro base station, a pico base station, a femto base station, and a remote radio head, are installed in a multi-layered manner (for example, see Non-Patent Document 1).

### Citation List

### Non-Patent Document

Non-Patent Document 1: 3rd Generation Partnership Project; Technical Specification Group Radio Access Network; Evolved Universal Terrestrial Radio Access (E-UTRA); Further advancements for E-UTRA physical layer aspects (Release 9); 3GPP TR 36.814 V9.0.0 (2010-03); Section 9A, Heterogeneous Deployments

### Summary of Invention

### Technical Problem

When a plurality of radio signals are sent by using shared radio resources (such as time and frequency), the plurality of radio signals interfere with each other. A radio signal having a large transmission power strongly interferes with other radio signals. In the heterogeneous network described in Non-Patent Document 1, since a plurality of types of radio base stations having different transmission powers can use a shared period of time and frequency, if a radio base station having a larger transmission power continues to occupy radio resources for sending a radio signal, excessive interference may be imposed on a radio signal sent by a radio base station having a smaller transmission power.

In view of this situation, an object of the present invention is to appropriately control resources used by a radio base station having a larger transmission power to send a radio signal, in order to reduce interference imposed by a radio signal sent from the radio base station having the larger transmission power on a radio signal sent from a radio base station having a smaller transmission power in a radio communication system having a plurality of types of radio base stations having different transmission powers (transmission capabilities).

### Solution to Problem

A radio communication system according to the present invention includes a first radio base station that forms a first cell; a plurality of second radio base stations each of which is connected to the first radio base station and forms, in the first cell formed by the first radio base station to be connected, a second cell having a smaller area than the first cell; and a plurality of mobile stations each of which includes a radio communication section that establishes a radio connection to at least one of the first radio base station and a second radio base station corresponding to resident cells where the mobile station is located among the first cell the second cells to execute radio communication. The first radio base station includes a radio communication section capable of executing radio communication synchronously with each of the second radio base stations forming the second cells in the first cell formed by the first radio base station; a resource specifying section that specifies, according to a parameter that affects the amount of communication of at least one of the first radio base station and the second radio base station, a number and placement of first resources in which the radio communication section should execute radio communication and a number and placement of second sources in which the radio communication section should stop radio communication, the first resources and the second resources being included in unit resources occupying at least one of a predetermined time length and a predetermined frequency bandwidth; and a communication control section that controls the radio communication section such that the radio communication section executes radio communication in the first resources specified by the resource specifying section, and such that the radio communication section stops radio communication in the second resources specified by the resource specifying section.

"The parameter that affects the amount of communication of at least one of the first radio base station and the second radio base station" includes, for example, the communication load of the first radio base station, the number of mobile stations connected by radio to the first radio base station, the number of second cells formed in the first cell formed by the first radio base station, the amounts of communication in mobile stations connected by radio to the second radio base stations corresponding to second cells formed in the first cell formed by the first radio base station, and the number of mobile stations connected by radio to the second radio base stations corresponding to second cells formed in the first cell formed by the first radio base station, but is not limited to these examples.
"The resources" mean radio resources used when radio communication is executed, and include, for example, a time length (such as a sub-frame or a time slot), a frequency band (such as a sub-carrier), and a combination of a time length and a frequency band (such as a resource block).

According to the above-described configuration, since the first radio base station provides resources in which radio communication executed by the radio communication section of the first radio base station is stopped, according to the parameter that affects the amount of communication of at least one of the first radio base station and the second radio base station that forms a second cell in the first cell formed by the first radio base station, interference imposed by the first radio base station on radio waves (a radio signal) sent by the second radio base station is reduced.

It is preferable that each of the mobile stations further include a characteristic-value measuring section that measures a reception characteristic value of a radio signal sent from each of the first radio base station and the second radio base station corresponding to the resident cells; the first radio base station further include a correction-value specifying section that specifies, according to the number and the placement of the first resources and the number and the placement of the second resources specified by the resource specifying section in the unit resources, a correction value used to correct the reception characteristic value of the radio signal sent from the second radio base station and received by the mobile station, and a correction-value reporting section that reports the correction value specified by the correction-value specifying section to the mobile station; each of the mobile stations further include a characteristic-value correction section that corrects the reception characteristic value of the radio signal sent from the second radio base station, the reception characteristic value being measured by the characteristic-value measuring section, by using the correction value reported from the correction-value reporting section of the first radio base station; and the first radio base station or the mobile station select the first radio base station or the second radio base station, whichever has the best reception characteristic value, as a radio connection destination of the mobile station.

According to the above-described configuration, since the reception characteristic value of the radio signal sent from the second radio base station, the reception characteristic value being measured by the characteristic-value measuring section, is corrected by using the correction value, the number of mobile stations connected by radio to the second radio base station can be increased. In addition, a correction value used to correct the reception characteristic value of the radio signal sent from the second radio base station and received by the mobile station is specified according to the number and the placement of the first resources and the number and the placement of the second resources specified in the unit resource, the correction value (consequently, the area of the second cell) can be more appropriate.

It is preferable that each of the mobile stations further include a characteristic-value measuring section that measures a reception characteristic value of a radio signal sent from each of the first radio base station and the second radio base station corresponding to the resident cells; the first radio base station further include a correction-value specifying section that specifies, according to at least one of the states of the first radio base station and the second radio base station, a correction value used to correct the reception characteristic value of the radio signal sent from the second radio base station and received by the mobile station, and a correction-value reporting section that reports the correction value specified by the correction-value specifying section to the mobile station; each of the mobile stations further include a characteristic-value correction section that corrects the reception characteristic value of the radio signal sent from the second radio base station, the reception characteristic value being measured by the characteristic-value measuring section, by using the correction value reported from the correction-value reporting section of the first radio base station; and after the first radio base station or the mobile station selects the first radio base station or the second radio base station, whichever has the best reception characteristic value, as a radio connection destination of the mobile station, the resource specifying section of the first radio base station specify the number and the placement of the first resources and the number and the placement of the second resources in predetermined unit resources according to a parameter that affects at least one of the amount of communication in the first radio base station and the amount of communication in the second radio base station.

According to the above-described configuration, since, after the radio connection destination of the mobile station is selected according to the reception characteristic value of the first radio base station and the reception characteristic value of the second radio base station corrected by using the correction value, the resource specifying section specifies the number and the placement of the first resources and the number and the placement of the second resources in the predetermined unit resource according to the parameter that affects at least one of the amount of communication in the first radio base station and the amount of communication in the second radio base station, the number and the placement of the first resources and the number and the placement of the second resources can be more appropriate.

Each of the preferable forms to be described below can be combined with any of the radio communication system according to the present invention, described above, and the radio communication systems according to the preferable forms, described above.

It is preferable that the resource specifying section of the first radio base station specify a larger number of the second resources in the unit resources as the communication load of the first radio base station decreases.

It is preferable that the resource specifying section of the first radio base station specify a larger number of the second resources in the unit resources as a number of mobile stations connected by radio to the first radio base station decreases.

It is preferable that the resource specifying section of the first radio base station specify a larger number of the second resources in the unit resources as a number of mobile stations connected by radio to the first radio base station and having an amount of communication exceeding a predetermined threshold decreases.

According to the above-described configurations, since a larger number of second resources, in which the first radio base station should stop radio communication, are specified as the number of radio resources that should be assigned to mobile stations connected by radio to the first radio base station decreases, interference imposed by the first radio base station on radio waves (a radio signal) sent by the second radio base station can be reduced further.

It is preferable that the resource specifying section of the first radio base station specify a larger number of the second resources in the unit resources as a number of second cells formed in the first cell formed by the first radio base station increases.

It is preferable that the resource specifying section of the first radio base station specify a larger number of the second resources in the unit resources as a number of the second cells formed in the first cell formed by the first radio base station and corresponding to second base stations connected by radio to one or more mobile stations increases.

According to the above-described configurations, since a larger number of second resources, in which the first radio base station should stop radio communication, are specified as the number of second cells (preferably, the number of second cells corresponding to second radio base stations connected by radio to one or more mobile stations) increases, interference imposed by the first radio base station on radio waves (a radio signal) sent by the second radio base station can be reduced further.

It is preferable that the resource specifying section of the first radio base station specify a larger number of the second resources in the unit resources as the amounts of communication of mobile stations connected by radio to the second radio base stations corresponding to the second cells formed in the first cell formed by the first radio base station increase.

According to the above-described configuration, since a larger number of the second resources, in which the first radio base station should stop radio communication, are specified as the amounts of traffic in mobile stations connected by radio to the second radio base station increase, interference imposed by the first radio base station on radio waves (a radio signal) sent by the second radio base station can be reduced further.

It is preferable that the resource specifying section of the first radio base station specify a larger number of the second resources in the unit resources as the amounts of communication of mobile stations connected by radio to second radio base stations that correspond to the second cells formed in the first cell formed by the first radio base station and that have distances from the first radio base station exceeding a predetermined threshold increase.

According to the above-described configuration, since a larger number of second resources, in which the first radio base station should stop radio communication, are specified as the amounts of traffic in mobile stations connected by radio to a second radio base station located close to the first radio base station increase, interference imposed by the first radio base station on radio waves (a radio signal) sent by the second radio base station can be reduced further.

It is preferable that the resource specifying section of the first radio base station specify a larger number of the second resources in the unit resources as a number of mobile stations connected by radio to the second radio base stations corresponding to the second cells formed in the first cell formed by the first radio base station increases.

According to the above-described configuration, since a larger number of second resources, in which the first radio base station should stop radio communication, are specified as the number of mobile stations connected by radio to the second radio base station increases, interference imposed by the first radio base station on radio waves (a radio signal) sent by the second radio base station can be reduced further.

It is preferable that the resource specifying section of the first radio base station specify a larger number of the second resources in the unit resources as a number of mobile stations connected by radio to second radio base stations that correspond to the second cells formed in the first cell formed by the first radio base station and that have distances from the first radio base station exceeding a predetermined threshold increases.

According to the above-described configuration, since a larger number of second resources, in which the first radio base station should stop radio communication, are specified as the number of mobile stations connected by radio to a second radio base station located close to the first radio base station increases, interference imposed by the first radio base station on radio waves (a radio signal) sent by the second radio base station can be reduced further.

It is preferable that the resource specifying section of the first radio base station specify a larger number of the second resources in the unit resources as a number of second radio base stations located in an area having a distance from the first radio base station smaller than a predetermined threshold within the first cell formed by the first radio base station increases.

According to the above-described configuration, since a larger number of second resources, in which the first radio base station should stop radio communication, are specified when more second radio base stations are located close to the first radio base station, interference imposed by the first radio base station on radio waves (a radio signal) sent by the second radio base station can be reduced further.

The resource specifying section of the first radio base station may specify a larger number of the second resources in the unit resources in a case in which one or more second radio base stations are located in an area having a distance from the first radio base station smaller than a predetermined threshold within the first cell formed by the first radio base station than in a case in which no second radio base station is located in the area.

It is preferable that, in the first radio base station, the unit resources include a plurality of lower unit resources each corresponding to one or both of a predetermined time length and a predetermined frequency bandwidth; unique priority numbers be assigned to the plurality of lower unit resources respectively; and the resource specifying section of the first radio base station place the first unit resources according to the priority numbers.

According to the above-described configuration, the first unit resources, in which the first radio base station should execute radio communication, are placed according to the priority numbers.

The second radio base station selects the lower unit resources according to the reverse order of the priority numbers in the first radio base station to which the second radio base station is connected and executes radio communication with the mobile station by using the selected lower unit resources.

According to the above-described configuration, the second radio base station can execute radio communication in lower unit resources where it is more likely that the first radio base station does not send a radio signal (lower unit resources where it is more likely that interference from the first radio base station is low).

A radio base station according to the present invention is a first radio base station that forms a first cell in a radio communication system provided with the first radio base station; a plurality of second radio base stations each of which is connected to the first radio base station and forms, in the first cell formed by the first radio base station to be connected, a second cell having a smaller area than the first cell; and a plurality of mobile stations each of which is provided with a radio communication section that establishes a radio connection to at least one of the first radio base station and the second radio base station corresponding to resident cells where the mobile station is located among the first cell and the second cells to execute radio communication. The radio base station includes a radio communication section capable of executing radio communication synchronously with each of the second radio base stations forming the second cells in the first cell formed by the first radio base station; a resource specifying section that specifies, according to a parameter that affects the amount of communication of at least one of the first radio base station and the second radio base station, a number and placement of first resources in which the radio communication section should execute radio communication and a number and placement of second sources in which the radio communication section should stop radio communication, the first resources and the second resources being included in unit resources occupying at least one of a predetermined time length and a predetermined frequency bandwidth; and a communication control section that controls the radio communication section such that the radio communication section executes radio communication in the first resources specified by the resource specifying section, and such that the radio communication section stops radio communication in the second resources specified by the resource specifying section.

A communication control method according to the present invention is for a radio communication system provided with a first radio base station that forms a first cell; a plurality of second radio base stations each of which is connected to the first radio base station and forms, in the first cell formed by the first radio base station to be connected, a second cell having a smaller area than the first cell; and a plurality of mobile stations each of which is provided with a radio communication section that establishes a radio connection to at least one of the first radio base station and the second radio base station corresponding to resident cells where the mobile station is located among the first cell and the second cells to execute radio communication. The communication control method includes executing radio communication synchronously with each of the second radio base stations forming the second cells in the first cell formed by the first radio base station; specifying, according to a parameter that affects the amount of communication of at least one of the first radio base station and the second radio base station, a number and placement of first resources in which the radio communication section should execute radio communication and a number and placement of second sources in which the radio communication section should stop radio communication, the first resources and the second resources being included in unit resources occupying at least one of a predetermined time length and a predetermined frequency bandwidth; and controlling the radio communication section such that the radio communication section executes radio communication in the first resources specified by the resource specifying section, and such that the radio communication section stops radio communication in the second resources specified by the resource specifying section.

### Brief Description of the Drawings

Fig. 1 is a block diagram showing a radio communication system according to a first embodiment of the present invention.
Fig. 2 is a block diagram showing the configuration of a user equipment according to the first embodiment of the present invention.
Fig. 3 is a block diagram showing the configuration of a macro base station according to the first embodiment of the present invention.
Fig. 4 is a block diagram showing the configuration of a pico base station according to the first embodiment of the present invention.
Fig. 5 is a view showing the format of a radio frame transceived between communication elements in the radio communication system according to the first embodiment of the present invention.
Fig. 6 is an outline view of inter-cell interference coordination (ICIC) according to the first embodiment of the present invention.
Fig. 7 is a view showing an example case of setting resource allocation information in the first embodiment of the present invention.
Fig. 8 is a view showing another example case of setting resource allocation information in the first embodiment of the present invention.
Fig. 9 is a view showing an example case of setting resource allocation information in a second embodiment of the present invention.
Fig. 10 is a view showing another example case of setting resource allocation information in the second embodiment of the present invention.
Fig. 11 is a view showing an example case of setting resource allocation information in a third embodiment of the present invention.
Fig. 12 is a view showing another example case of setting resource allocation information in the third embodiment of the present invention.
Fig. 13 is a view showing an example case of setting resource allocation information in a fourth embodiment of the present invention.
Fig. 14 is a block diagram showing the configuration of a user equipment according to a fifth embodiment of the present invention.
Fig. 15 is a block diagram showing the configuration of a macro base station according to the fifth embodiment of the present invention.
Fig. 16 is a view explaining how a reception characteristic (reception power) is corrected in the fifth embodiment of the present invention.
Fig. 17 is a flowchart of how resource allocation information and a correction value are specified in the fifth embodiment of the present invention.
Fig. 18 includes views showing a change in the area of a pico cell according to whether or not the correction is made.
Fig. 19 is a block diagram showing the configuration of a macro base station according to a sixth embodiment of the present invention.
Fig. 20 is a flowchart of how resource allocation information and a correction value are specified in the sixth embodiment of the present invention.
Fig. 21 is a view showing an example case of priority order given to sub-frames in the radio frame.
Fig. 22 includes views showing sub-frame placement according to the priority order.
Fig. 23 is a view showing the format of a radio frame transceived between communication elements in a radio communication system according to an eighth embodiment of the present invention.
Fig. 24 is an outline view of inter-cell interference coordination according to the eighth embodiment of the present invention.
Fig. 25 is a view showing the format of a radio frame transceived between communication elements in a radio communication system according to a ninth embodiment of the present invention.
Fig. 26 is an outline view of inter-cell interference coordination according to the ninth embodiment of the present invention.

### Description of Embodiments

### First embodiment

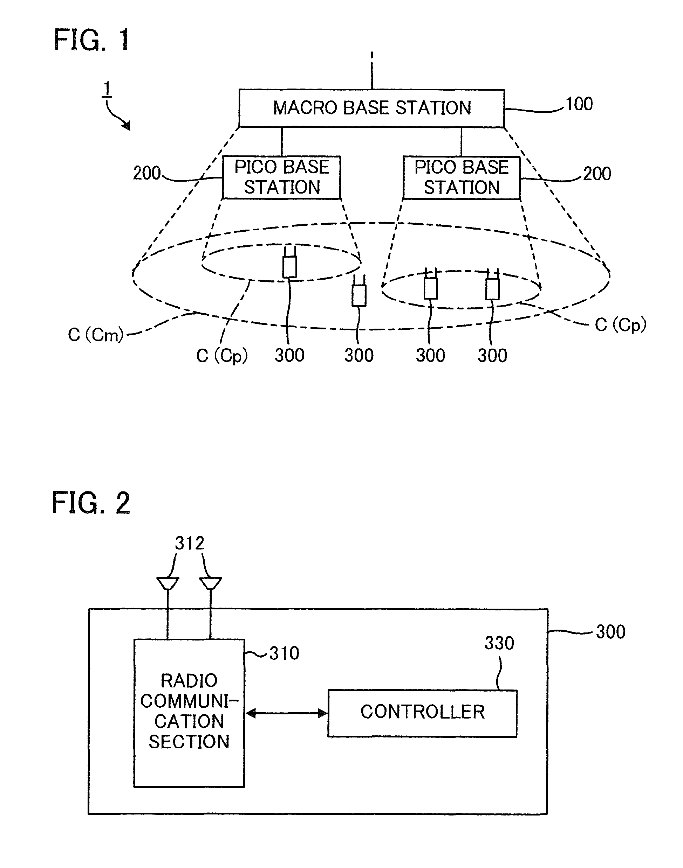

Fig. 1 is a block diagram showing a radio communication system 1 according to a first embodiment of the present invention. The radio communication system 1 includes a macro base station (macro evolved node B (eNodeB)) 100, pico base stations (pico eNodeB) 200, and user equipments 300. The macro base station 100 and the pico base stations 200 are connected to each other by wire or by radio. The macro base station 100 is also connected to a core network, not shown. For simplicity of description, only one macro base station 100 is shown in the figure, but it is understood as a matter of course that the radio communication system 1 can include a plurality of macro base stations 100.

Each of the communication elements (such as the macro base station 100, the pico base stations 200, and the user equipments 300) in the radio communication system 1 performs radio communication according to a predetermined radio access technology, such as long term evolution (LTE). In the present embodiment, an example case will be described in which the radio communication system 1 operates according to LTE, but there is no intention to limit the technical scope of the present invention. The present invention can also be applied to other radio access technologies (for example, WiMAX, stipulated in IEEE 802.16) after necessary design changes are made.

A user equipment 300 connects by radio to a base station (macro base station 100, pico base station 200) that sends radio waves satisfying predetermined reception quality to execute radio communication. Since radio waves attenuate as they propagate and tend to be affected by fading as the propagation distance becomes longer, the range where the predetermined reception quality is maintained (range in which the user equipment 300 can communicate by radio with the base station) is limited to a finite range around the base station. In other words, each base station forms therearound a cell C in which radio communication with the base station is possible. The macro base station 100 forms a macro cell Cm, and the pico base stations 200 form pico cells Cp. The pico cells Cp are formed in the macro cell Cm formed by the macro cell 100 to which the pico base stations 200 that form the pico cells Cp are connected. A plurality of pico cells Cp can be formed in one macro cell Cm.

Each of the base stations (the macro base station 100 and the pico base stations 200) can communicate by radio with a user equipment (use equipment, UE) 300 located in the cell of that base station by transceiving radio waves (radio signals) therewith. Conversely, a user equipment 300 can communicate by radio with the base station (macro base station 100, pico base station 200) corresponding to the cell C (macro cell Cm, pico cell Cp) in which that user equipment 300 is located, by transceiving radio waves (radio signals) therewith.

The macro base station 100 has a higher radio transmission capability (antenna gain, maximum transmission power, average transmission power, and others) than the pico base stations 200. In addition, the macro base station 100 is larger in size (width, depth, and height) than the pico base stations 200, and the transmission and reception antennas are installed higher in the macro base station 100 than in the pico base stations 200. Therefore, the macro base station 100 can communicate by radio with a user equipment 300 located farther away. Consequently, the macro cell Cm is larger in area than the pico cells Cp. For example, the macro cell Cm has a radius of about several hundred meters to several tens of kilometers, whereas the pico cells Cp have a radius of about several meters to several tens of meters.

As understood from the foregoing description, the macro base station 100 and the pico base stations 200 in the radio communication system 1 form a heterogeneous network (HetNet), in which a plurality of types of radio base stations having different transmission powers (transmission capabilities) are installed in a multi-layer manner (see 3rd Generation Partnership Project; Technical Specification Group Radio Access Network; Evolved Universal Terrestrial Radio Access (E-UTRA); Further advancements for E-UTRA physical layer aspects (Release 9); 3GPP TR 36.814 V9.0.0 (2010-03); Section 9A, Heterogeneous Deployments).

Since the pico cells Cp are formed inside the macro cell Cm in a multi-layer manner (are overlaid thereon), when a user equipment 300 is located in a pico cell Cp, it can be understood that the user equipment 300 can communicate by radio with both the pico base station 200 forming that pico cell Cp and the macro base station 100 forming the macro cell Cm that includes the pico cell Cp.

Any radio communication means can be used between each base station and a user equipment 300. For example, orthogonal frequency division multiple access (OFDMA) may be employed for downlink, and single-carrier frequency division multiple access (SC-FDMA) may be employed for uplink.

Fig. 2 is a block diagram showing the configuration of the user equipment 300 according to this embodiment of the present invention. The user equipment 300 includes a radio communication section 310 and a controller 330. For convenience, an output unit for outputting sound or video, an input unit for accepting support from the user, and other units are omitted in the figure.

The radio communication section 310 establishes a radio connection to execute radio communication with a base station (macro base station 100, pico base station 200). The radio communication section 310 includes transmission and reception antennas 312, a receiving circuit for receiving radio waves from the base station and converting them to an electrical signal, and a transmission circuit for converting an electrical signal, such as a voice signal, to radio waves and sending them. The controller 330 controls the operation of the user equipment 300, including the radio communication section 310. The controller 330 can be a functional block implemented when a central processing unit (CPU), not shown, included in the user equipment 300 executes a computer program stored in a storage section, not shown, and functions according to the computer program.

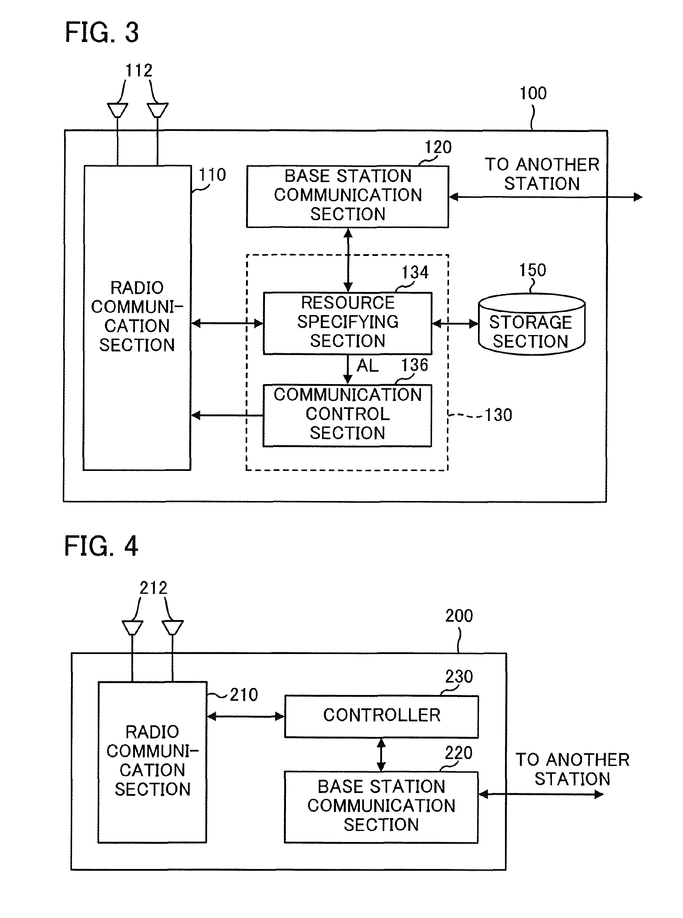

Fig. 3 is a block diagram showing the configuration of the macro base station 100 according to this embodiment of the present invention. The macro base station 100 includes a radio communication section 110, a base-station communication section 120, a controller 130, and a storage section 150.

The radio communication section 110 establishes a radio connection to execute radio communication with a user equipment 300. The radio communication section 110 includes transmission and reception antennas 112, a receiving circuit for receiving radio waves from the user equipment 300 and converting them to an electrical signal, a transmission circuit for converting an electrical signal, such as a voice signal, to radio waves and sending them, and a measuring section for measuring the number of user equipments 300 connected by radio and the amount of traffic produced with the user equipments 300 connected by radio (details will be described later).

The base-station communication section 120 executes communication with another base station (macro base station 100, pico base station 200) and sends and receives an electrical signal to and from the other base station. When the macro base station 100 communicates with another base station by radio, it is understood as a matter of course that the radio communication section 110 can also operate as the base-station communication section 120.

The controller 130 includes a resource specifying section 134 and a communication control section 136. The controller 130, and the resource specifying section 134 and the communication control section 136 included in the controller 130, can be functional blocks implemented when a CPU, not shown, included in the macro base station 100 executes a computer program stored in the storage section 150 and functions according to the computer program. The detailed operation of the controller 130 will be described later.

The storage section 150 is a storage medium for storing the above-described computer program and various pieces of information required for transmission control of the present invention, and is formed of a random access memory (RAM), for example.

Fig. 4 is a block diagram showing the configuration of the pico base station 200 according to this embodiment of the present invention. The pico base station 200 includes a radio communication section 210, a base-station communication section 220, and a controller 230.

The radio communication section 210 establishes a radio connection to execute radio communication with a user equipment 300. The radio communication section 210 includes transmission and reception antennas 212, a receiving circuit for receiving radio waves from the user equipment 300 and converting them to an electrical signal, a transmission circuit for converting an electrical signal, such as a voice signal, to radio waves and sending them, and a measuring section for measuring the number of user equipments 300 connected by radio and the amount of traffic produced with the user equipments 300 connected by radio (details will be described later).

The base-station communication section 220 executes communication with the macro base station 100 to which the pico base station 200 is connected and sends and receives an electrical signal to and from the macro base station 100. When the pico base station 200 communicates with the macro base station 100 by radio, the radio communication section 210 may also operate as the base-station communication section 220.

The pico base station 200 can receive information sent from the macro base station 100 and forward the information to the user equipment 300, and can receive information sent from the user equipment 300 and forward the information to the macro base station 100. More specifically, the controller 230 supplies, to the radio communication section 210, an electrical signal which the base-station communication section 220 of the pico base station 200 receives from the macro base station 100. The radio communication section 210 converts the supplied electrical signal to radio waves and sends them to the user equipment 300. The controller 230 also supplies, to the base-station communication section 220, an electrical signal received and converted by the radio communication section 210 of the pico base station 200. The base-station communication section 220 sends the supplied electrical signal to the macro base station 100. With the above-described configuration, even if it is difficult for the user equipment 300 to communicate with the macro base station 100 by radio because the user equipment 300 is close to the pico base station 200, necessary information can be transceived between the user equipment 300 and the macro base station 100.

The controller 230 of the pico base station 200 can be a functional block implemented when a CPU, not shown, included in the pico base station 200 executes a computer program stored in a storage section, not shown, and functions according to the computer program.

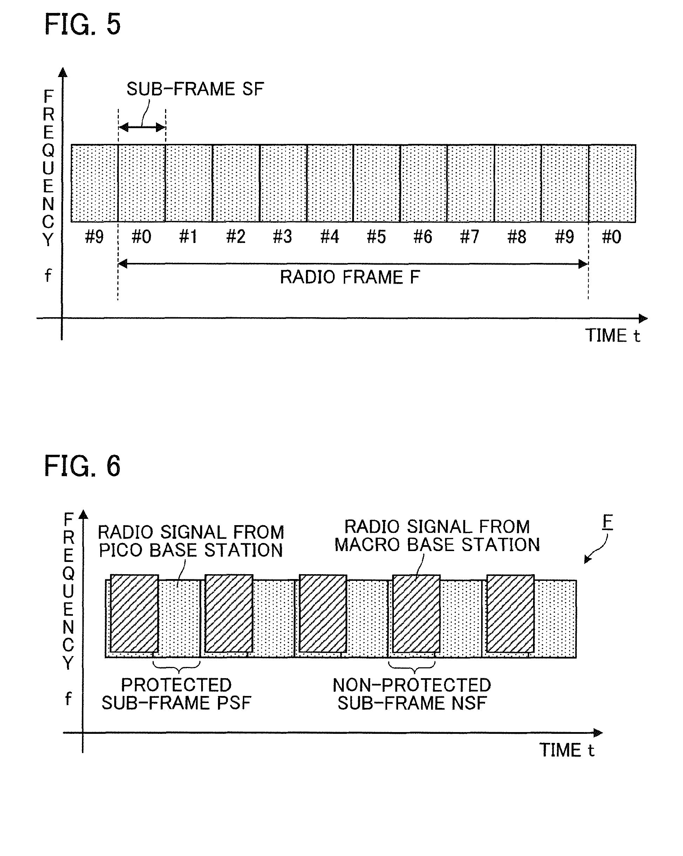

Fig. 5 is a view showing the format of a radio frame F transceived between communication elements in the radio communication system 1. The radio frame F is a transmission unit of a radio signal sent by each of the communication elements (macro base station 100, pico base stations 200, user equipments 300, and others) and occupies a predetermined time length (for example, 10 ms) and a predetermined bandwidth. A series of radio signals are formed when the radio frames F are sent consecutively.

The radio frame F includes a plurality of sub-frames SF. A sub-frame SF is a transmission unit occupying a shorter time length (for example, 1 ms) than the radio frame F. In one radio frame F, numbers are assigned to sub-frames SF in ascending order starting from zero (#0).

Fig. 6 is an outline view of inter-cell interference coordination (ICIC) according to the first embodiment of the present invention.

To explain ICIC, it is assumed here that a macro base station 100 and a pico base station 200 that forms a pico cell Cp in the macro cell Cm formed by the macro base station 100 use the same radio frame timing and the same frequency band to send radio signals (radio frames F). Sending radio signals at the same radio frame timing means that the transmission start time of the radio frame F sent by the macro base station 100 is the same as the transmission start time of the radio frame F sent by the pico base station 200. In other words, the radio communication section 110 of the macro base station 100 and the radio communication section 210 of the pico base station 200 can perform radio communication synchronously.

In the above case, since the radio signal from the macro base station 100 and the radio signal from the pico base station 200 are sent in the same frequency band, they interfere with each other. In particular, since the macro base station 100 has a larger transmission power than the pico base station 200, the radio signal from the macro base station 100 strongly interfere with the radio signal from the pico base station 200. Therefore, if both radio signals are always sent continuously, it is difficult for the user equipment 300 to receive the radio signal from the pico base station 200.

In view of the above-described situation, the radio communication section 110 of the macro base station 100 sends the radio signal to the user equipment 300 intermittently according to a pattern of allocated sub-frames SF in various ways, described later, in ICIC of the present invention. For example, as shown in Fig. 6, the communication control section 136 of the radio communication section 110 controls the radio communication section 110 such that the transmission of the radio signal is executed and stopped alternately every sub-frame SF. Since the radio signal from the pico base station 200 is protected from interference caused by the macro base station 100, sub-frames SF in which the transmission of the radio signal from the macro base station 100 is stopped are called protected sub-frames PSF. In contrast, sub-frames SF in which the transmission of the radio signal from the macro base station 100 is executed are called non-protected sub-frames NSF.

On the other hand, the radio communication section 210 of the pico base station 200 sends the radio signal to the user equipment 300 continuously, that is, in both non-protected sub-frames NSF and protected sub-frames PSF.

In protected sub-frames PSF in which the radio communication section 110 of the macro base station 100 does not send the radio signal, only the radio communication section 210 of the pico base station 200 sends the radio signal. Therefore, since the radio signal from the macro base station 100 does not interfere with the radio signal from the pico base station 200 in protected sub-frames PSF, a user equipment 300 that is located in both the macro cell Cm formed by the macro base station 100 and the pico cell Cp formed by the pico base station 200 can receive the radio signal from the pico base station 200 with higher quality.

The resource specifying section 134 of the macro base station 100 of the first embodiment specifies a larger number of protected sub-frames PSF in the radio frame F that the radio communication section 110 sends when the macro base station 100 has a smaller amount of traffic (lower communication load).

More specifically, the resource specifying section 134 acquires information about the amount of traffic from the radio communication section 110. The amount of traffic may be any one of or a combination of two or more of the amount of data to be sent or received by the radio communication section 110 of the macro base station 100; the transmission throughput or the reception throughput of the radio communication section 110 of the macro base station 100; or the average transmission data rate or the average reception data rate of respective user equipments 300 that connect by radio to the radio communication section 110 of the macro base station 100.

The resource specifying section 134 specifies resource allocation information AL according to the amount of traffic acquired from the radio communication section 110. The resource allocation information AL indicates the number and placement of non-protected sub-frames NSF and protected sub-frames PSF in each radio frame F. The resource specifying section 134 specifies the resource allocation information AL such that the radio frame F includes more protected sub-frames PSF as the macro base station 100 has a smaller amount of traffic and supplies the resource allocation information AL to the communication control section 136. The communication control section 136 controls the radio communication section 110 according to the resource allocation information AL specified by the resource specifying section 134.

The resource specifying section 134 may specify a larger number of protected sub-frames PSF in each radio frame F when a smaller number of user equipments 300 are connected by radio to the macro base station 100.

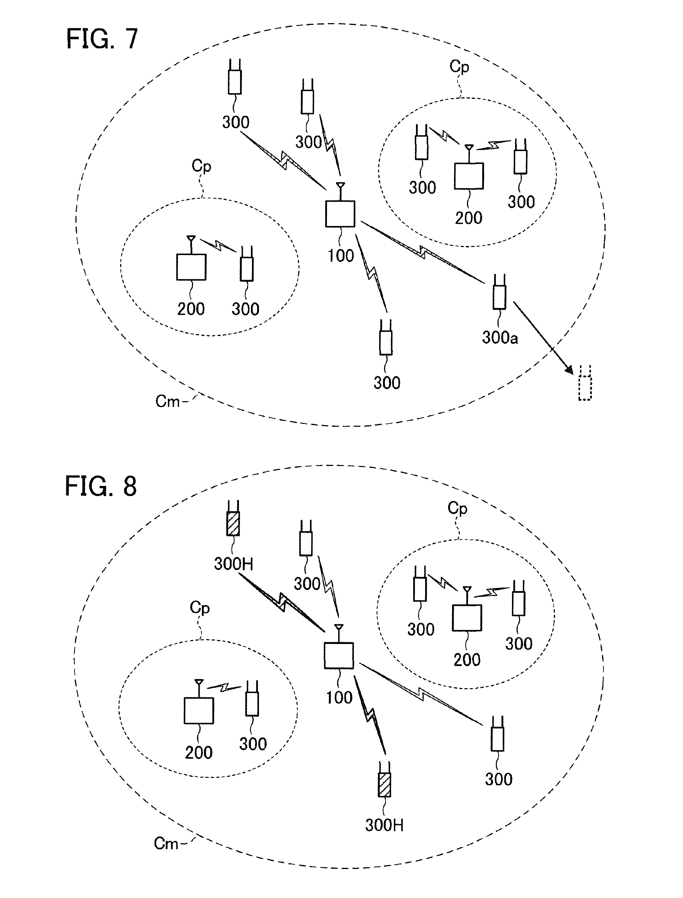

For example, in Fig. 7, four user equipments 300 are connected by radio to the macro base station 100. When a user equipment 300a connected by radio to the pico base station 200 moves, and the radio connection to the macro base station 100 is released, a total of three user equipments 300 are connected to the macro base station 100. Then, the resource specifying section 134 of the macro base station 100 specifies the resource allocation information AL such that the number of protected sub-frames PSF in each radio frame F increases.

The resource specifying section 134 may also specify a larger number of protected sub-frames PSF in each radio frame F when a smaller number of user equipments 300 connected by radio to the macro base station 100 and having amounts of traffic exceeding a predetermined threshold (hereafter called high-traffic user equipments 300H) exist.

For example, in Fig. 8, among four user equipments 300 connected by radio to the macro base station 100, two of them are high-traffic user equipments 300H. When one high-traffic user equipment 300H becomes a usual user equipment 300, a total of just one high-traffic user equipment 300 is connected to the macro base station 100. Then, the resource specifying section 134 of the macro base station 100 specifies the resource allocation information AL such that the number of protected sub-frames PSF in each radio frame F increases.

In the above-described configuration, the resource specifying section 134 of the macro base station 100 controls the communication control section 136 such that, the less the radio resources to be allocated to user equipments 300 connected by radio to the macro base station 100, the larger the number of protected sub-frames PSF, in which the transmission of the radio signal is stopped in the radio communication section 110 (in other words, the shorter the period (resource) in which the radio communication section 110 sends the radio signal in each radio frame F). Therefore, interference imposed by the macro base station 100 on the radio signal sent by the pico base station 200 can be reduced.

### Second embodiment

A second embodiment of the present invention will be described below. For elements having the same effects or functions in the following example embodiments as in the first embodiment, the reference symbols used in the above description will be used again, and a description thereof will be omitted, if unnecessary.

The resource specifying section 134 of a macro base station 100 according to the second embodiment acquires, from the base-station communication section 120, the number of pico cells Cp formed in the macro cell Cm formed by the macro base station 100 (for example, the number of pico base stations 200 that are connected to the macro base station 100 and that are operating, or the number of pico base stations 200 that are performing data-channel communication in addition to control-channel communication among the pico base stations 200 that are connected to the macro base station 100 and that are operating). Then, the resource specifying section 134 specifies resource allocation information AL such that, the larger the acquired number of pico cells Cp, the larger the number of protected sub-frames PSF in each radio frame F. The communication control section 136 controls the radio communication section 110 according to the resource allocation information AL specified by the resource specifying section 134.

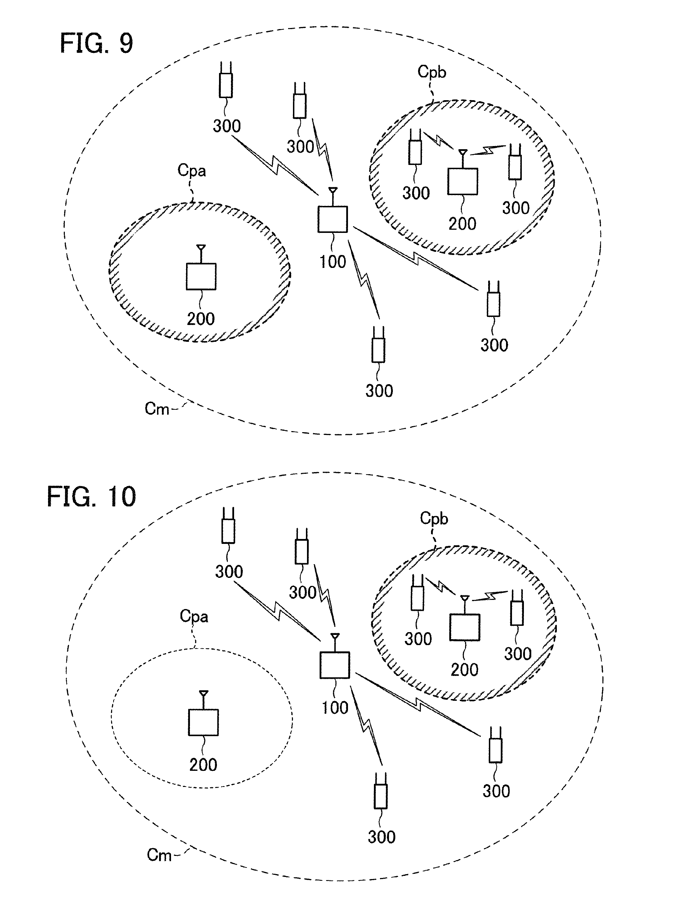

For example, in Fig. 9, two pico cells Cp (Cpa and Cpb) indicated by hatched frames are located in the macro cell Cm formed by the macro base station 100. Therefore, the resource specifying section 134 of the macro base station 100 specifies the resource allocation information AL such that the number of protected sub-frames PSF in each radio frame F is larger than when a smaller number of pico cells Cp are (that is, one pico cell is) formed in the macro cell Cm.

In the above-described configuration, the resource specifying section 134 of the macro base station 100 controls the communication control section 136 such that the number of protected sub-frames PSF, in which the radio communication section 110 of the macro base station 100 stops the transmission of a radio signal, increases (in other words, the period (resource) in which the radio communication section 110 sends the radio signal in each radio frame F is shorter) when the number of pico cells Cp is larger, that is, when it is more likely that a large number of user equipments 300 are connected by radio to the pico base stations 200. Therefore, the interference of the macro base station 100 imposed on radio signals sent to the user equipments 300 connected by radio to the pico base stations 200 can be reduced.

In Fig. 9, however, the pico base station 200 that forms the pico cell Cpa at the left in the figure is not connected to any user equipments 300. In terms of reducing interference imposed on radio signals sent to the user equipments 300 connected by radio to the pico base stations 200, it is understood that it is preferable that the pico cell Cpa not be counted when the resource specifying section 134 specifies the resource allocation information AL.

Therefore, for example, as shown in Fig. 10, it is preferable that the resource specifying section 134 of the macro base station 100 acquire the number of pico cells Cp that are formed in the macro cell Cm formed by the macro base station 100 and that are connected by radio to one or more user equipments 300 (in other words, the number of pico cells Cpb indicated by a hatched frame, that is, one), and specify the resource allocation information AL such that, the larger the acquired number of pico cells Cp, the larger the number of protected sub-frames PSF in each radio frame F.

In the above-described configuration, the period (resource) in which the radio communication section 110 of the macro base station 100 sends the radio signal is set shorter as the number of pico cells Cp corresponding to pico base stations connected by radio to one or more user equipments 300 increases, that is, as it becomes more likely that a large number of user equipments 300 are connected by radio to the pico base stations 200. Therefore, the interference of the macro base station 100 imposed on radio signals sent to the user equipments 300 connected by radio to the pico base stations 200 can be reduced.

### Third embodiment

The resource specifying section 134 of a macro base station 100 according to a third embodiment acquires, from the base-station communication section 120, the amount of traffic of user equipments 300 connected by radio to the pico base stations 200 corresponding to pico cells Cp formed in the macro cell Cm formed by the macro base station 100. Then, the resource specifying section 134 specifies resource allocation information AL such that, the larger the acquired amount of traffic, the larger the number of protected sub-frames PSF in each radio frame F. The communication control section 136 controls the radio communication section 110 according to the resource allocation information AL specified by the resource specifying section 134.

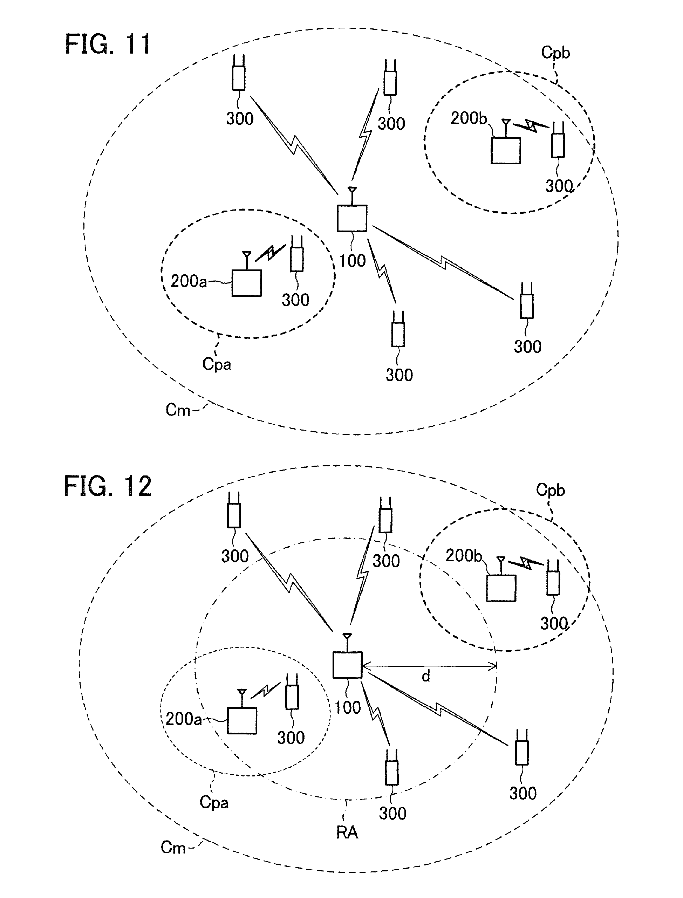

For example, in a case shown in Fig. 11, a pico base station 200a that forms a pico cell Cpa and a pico base station 200b that forms a pico cell Cpb each measure the amount of traffic of each user equipment 300 connected by radio to the pico base station 200 and supply the amount of traffic to the macro base station 100 through the base-station communication section 220. The base-station communication section 120 of the macro base station 100 specifies the resource allocation information AL such that, the larger the total amount of traffic of the user equipments 300, acquired from the pico base station 200 (200a and 200b), the larger the number of protected sub-frames PSF in each radio frame F.

In the above-described configuration, the resource specifying section 134 of the macro base station 100 controls the communication control section 136 such that, the more the radio resources to be assigned to the user equipments 300 connected by radio to the pico base stations 200, the larger the number of protected sub-frames PSF, in which the radio communication section 110 of the macro base station 100 stops the transmission of a radio signal (in other words, the shorter the period (resource) in which the radio communication section 110 sends the radio signal in each radio frame F). Therefore, the interference of the macro base station 100 imposed on radio signals sent by the pico base stations 200 can be reduced.

Interference from the macro base station 100 differs between a user equipment 300 connected by radio to a pico base station 200 located close to the center of the macro cell Cm and a user equipment 300 connected by radio to a pico base station 200 located far away from the center of the macro cell Cm (at a cell edge of the macro cell Cm). The user equipment 300 connected by radio to the pico base station 200 located at the cell edge of the macro cell Cm may be affected by interference from a macro base station 100 other than the macro base station 100 connected to the pico base station 200, in addition to interference from the macro base station 100 connected to the pico base station 200. Therefore, it is understood that it is preferable that interference imposed on the user equipment 300 connected by radio to the pico base station 200 located at the cell edge be reduced further.

Therefore, for example, as shown in Fig. 12, it is preferable that the resource specifying section 134 of the macro base station 100 acquire the amount of traffic of a user equipment 300 connected by radio to a pico base station 200 (that is, a pico base station 200b) which corresponds to a pico cell Cp formed in the macro cell Cm formed by the macro base station 100 and whose distance from the macro base station 100 exceeds a threshold "d" (in other words, that is located at a cell edge), and specify the resource allocation information AL such that, the larger the acquired amount of traffic, the larger the number of protected sub-frames PSF in each radio frame F.

The resource specifying section 134 of the macro base station 100 can acquire the distance between the macro base station 100 and the pico base station 200 using any means.

For example, the latitudes and the longitudes of the macro base station 100 and each of the pico base stations 200 connected to the macro base station 100 may be stored in advance in the storage section 150 of the macro base station 100, and the distance between the macro base station 100 and each of the pico base stations 200 may be calculated from the stored latitudes and longitudes. The latitudes and the longitudes of the base stations may be acquired by a GPS position measuring section, not shown, provided for each of the base stations and may be supplied to the resource specifying section 134 when the resource specifying section 134 acquires the distance. In addition to the latitudes and the longitudes of the base stations, altitude information may be used to calculate the distance.

When the resource specifying section 134 acquires the distance, each pico station 200 may estimate the distance between the macro base station 100 and the pico base station 200 by measuring a characteristic value (reception power or signal to interference-and-noise ratio) of a radio signal sent from the macro base station 100 and may supply the estimated distance to the resource specifying section 134 of the macro base station 100. The distance may also be calculated from the round trip time (RTT) required for the transmission and reception of a radio signal, or angle information regarding the sector of the macro base station connected to the pico base station 200.

In the above-described configuration, the period (resource) in which the radio communication section 110 of the macro base station 100 sends the radio signal is set shorter as the amount of traffic of a user equipment 300 connected by radio to a pico base station located at a cell edge increases. Therefore, the interference of the macro base station 100 imposed on a radio signal sent to the user equipment 300 connected by radio to the pico base station 200 located at the cell edge can be reduced.

### Fourth embodiment

The resource specifying section 134 of a macro base station 100 according to a fourth embodiment acquires, through the base-station communication section 120, the distance between the macro base station 100 and each pico base station 200 connected to the macro base station 100 using the same means as in the third embodiment to acquire the number of pico base stations 200 located in a range that is included in the macro cell Cm formed by the macro base station 100 and in which the distance from the macro base station 100 is shorter than a predetermined threshold (in other words, located close to the macro base station 100). Then, the resource specifying section 134 specifies resource allocation information AL such that, the larger the number of pico base stations 200 located in the range, the larger the number of protected sub-frames PSF. The communication control section 136 controls the radio communication section 110 according to the resource allocation information AL specified by the resource specifying section 134.

It may be determined whether one or more pico base stations 200 are located in the range that is included in the macro cell Cm formed by the macro base station 100 and in which the distance from the macro base station 100 is shorter than the predetermined threshold (in other words, located close to the macro base station 100), and when one or more pico base stations 200 are located in the range, the resource allocation information AL may be specified such that the number of protected sub-frames PSF is larger than in a case in which no pico base station 200 is located in the range.

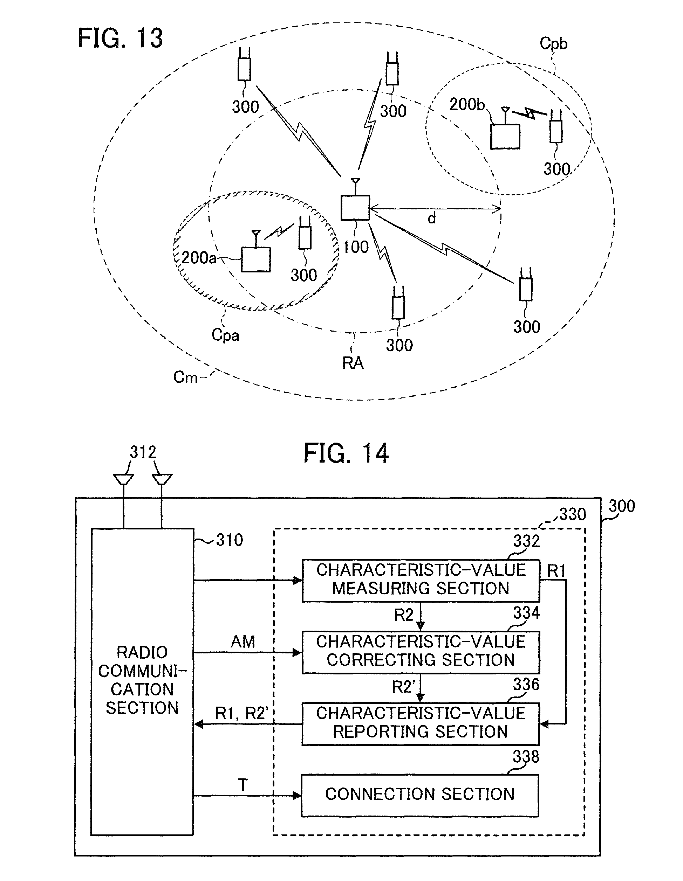

For example, in a case shown in Fig. 13, the resource specifying section 134 of the macro base station 100 acquires the distance to each of pico base stations 200 (200a and 200b) to acquire the number of pico base stations 200 located in a range RA in which the distance from the macro base station 100 is shorter than the threshold "d" (that is, one). The resource specifying section 134 specifies resource allocation information AL according to the number of pico base stations 200 placed in the range RA.

When a pico base station 200 is placed close to the macro base station 100, it is more likely that a user equipment 300 connected by radio to the pico base station 200 is also located close to the macro base station 100 (i.e., located at a position where interference from the macro base station 100 is strong). In the above-described configuration, when many pico base stations 200 are located closed to the macro base station 100, since the period (resource) in which the radio communication section 110 of the macro base station 100 sends a radio signal is set shorter, interference on the user equipments 300 connected by radio to the pico base stations 200 can be reduced.

### Fifth embodiment

In the foregoing embodiments, the resource allocation information AL is specified according to various parameters (such as the amount of traffic in the macro base station 100). In a fifth embodiment, the area of a pico cell Cp is variably controlled according to the specified resource allocation information AL.

Fig. 14 is a block diagram showing the configuration of a user equipment 300 according to the fifth embodiment of the present invention. A radio communication section 310 executes radio communication with a base station (macro base station 100, pico base station 200). The radio communication section 310 receives a correction value AM and destination cell information T from a macro base station 100 forming the macro cell Cm in which the user equipment 300 is located, and sends characteristic values R to the macro base station 100 (details will be described later).

A controller 330 includes a characteristic-value measuring section 332, a characteristic-value correcting section 334, a characteristic-value reporting section 336, and a connection section 338. The controller 330, and the characteristic-value measuring section 332, the characteristic-value correcting section 334, the characteristic-value reporting section 336, and the connection section 338 included in the controller 330, can be functional blocks implemented when a central processing unit (CPU), not shown, included in the user equipment 300 executes a computer program stored in a storage section, not shown, and functions according to the computer program. The detailed operation of the controller 330 will be described later.

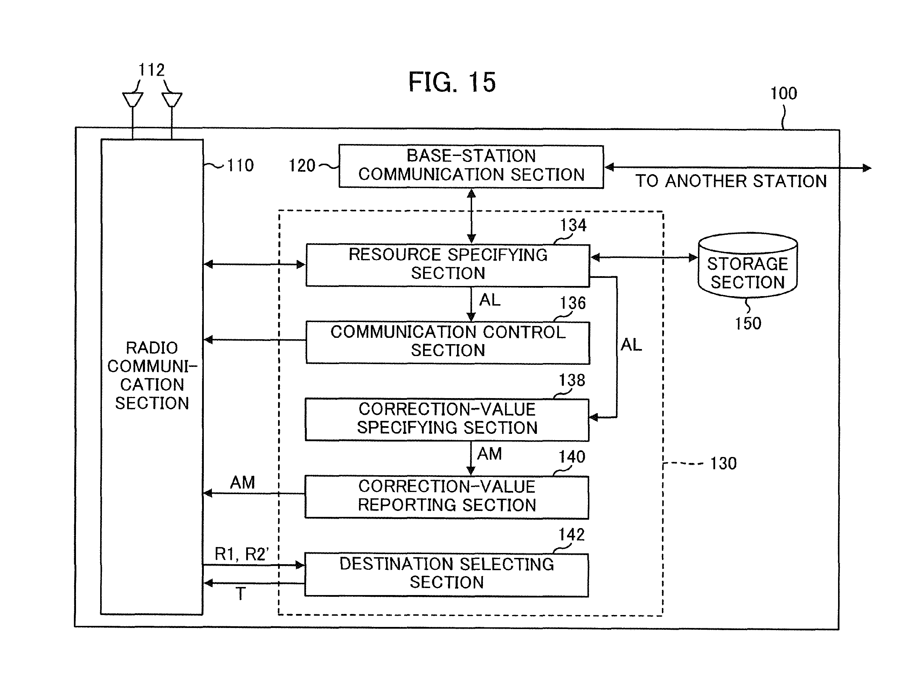

Fig. 15 is a block diagram showing the configuration of the macro base station 100 according to the fifth embodiment of the present invention. A radio communication section 110 executes radio communication with the user equipment 300. The radio communication section 110 sends the correction value AM and the destination cell information T to the user equipment 300 located in the macro cell of the macro base station 100 and receives the characteristic values R from the user equipment 300 (details will be described later).

A controller 130 includes, in addition to the resource specifying section 134 and the communication control section 136 of the first embodiment, a correction-value specifying section 138, a correction-value reporting section 140, and a destination selecting section 142. In the same way as in the first embodiment, the correction-value specifying section 138, the correction-value reporting section 140, and the destination selecting section 142 included in the controller 130 are also functional blocks implemented when a CPU, not shown, included in the macro base station 100 executes a computer program stored in a storage section 150 and functions according to the computer program. The detailed operation of the controller 130 will be described later.

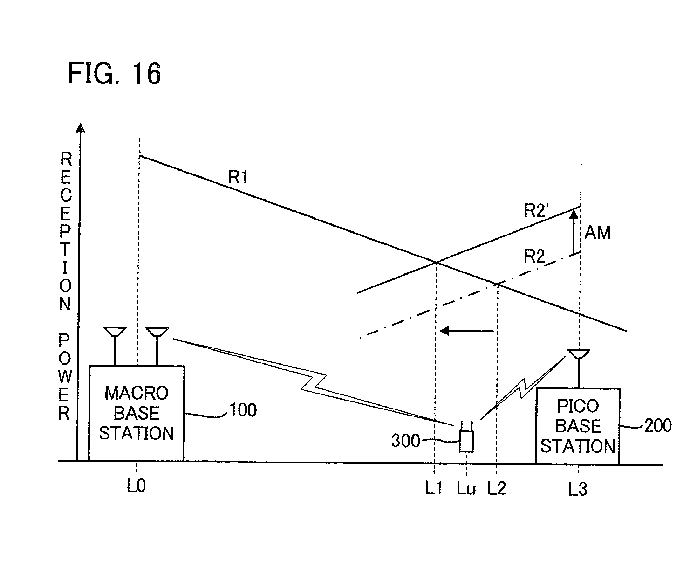

Details of how a reception characteristic (reception power) is corrected according to the fifth embodiment of the present invention will be described with reference to Fig. 16. As shown in Fig. 16, the user equipment 300 receives radio waves from each of the macro base station 100 and the pico base station 200. The characteristic-value measuring section 332 of the user equipment 300 measures the reception power (reference signal received power, RSRP) of the radio waves received from the macro base station 100 and the pico base station 200 to obtain a characteristic value R1 indicating the reception power from the macro base station 100 and a characteristic value R2 indicating the reception power from the pico base station 200. As shown in the figure, the farther the user equipment 300 is from each base station, the lower the reception power (characteristic value R1 and characteristic value R2) is.

For the sake of explanation, it is assumed in the following description that the macro base station 100 is disposed at a position L0, the pico base station 200 is disposed at a position L3, and the characteristic value R1, indicating the reception power from the macro base station 100, is equal to the characteristic value R2, indicating the reception power from the pico base station 200, at a position L2. It is also assumed that the user equipment 300 is disposed at a position Lu closer to the macro base station 100 than the position L2 is.

As shown in Fig. 16, at the position Lu, the characteristic value R1, obtained when the user equipment 300 measured the reception power of radio waves from the macro base station 100, is larger than the characteristic value R2, obtained when the user equipment 300 measured the reception power of radio waves from the pico base station 200. Therefore, based on a technology in which the user equipment 300 simply connects to a base station that transmits radio waves having a higher reception power, the user equipment 300 or a network-side equipment, such as a base station, would determine that the user equipment 300 disposed at the position Lu should connect to the macro base station 100 by radio.

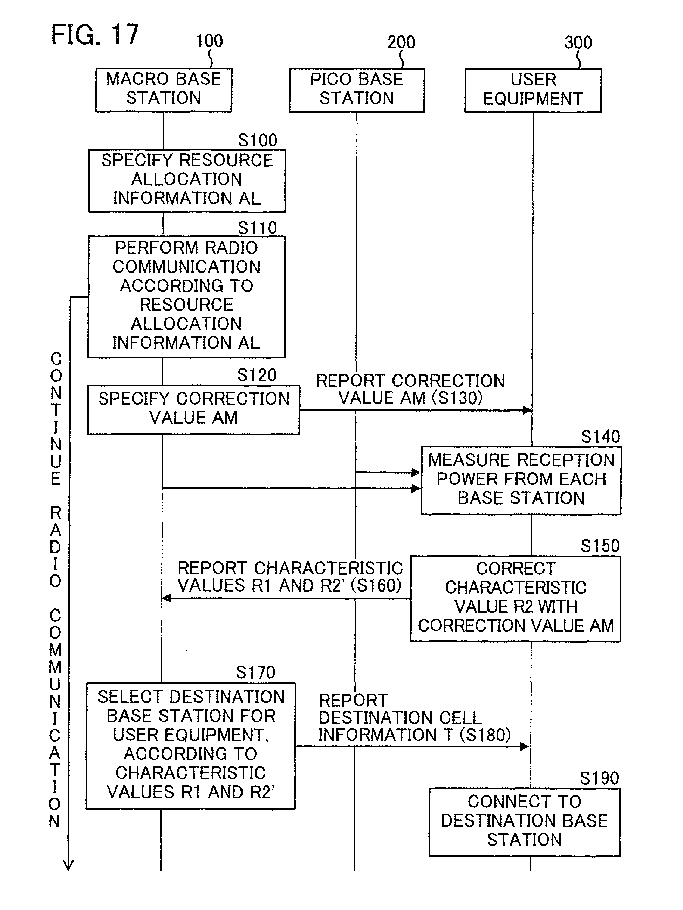

In the fifth embodiment, the characteristic value R2, indicating the reception power (reception characteristic) from the pico base station 200, is corrected (that is, the area of each pico cell Cp is changed) according to the resource allocation information AL specified by the resource specifying section 134. The specific operation will be described below with reference to Fig. 17.

The resource specifying section 134 of the macro base station 100 specifies resource allocation information AL according to one of the embodiments described earlier (step S100). The communication control section 136 of the macro base station 100 controls the radio communication section 110 according to the resource allocation information AL supplied from the resource specifying section 134 (step S110). Then, the radio communication section 110 of the macro base station 100 continues radio communication according to the current resource allocation information AL until new resource allocation information AL is supplied.

The resource allocation information AL is supplied from the resource specifying section 134 also to the correction-value specifying section 138. The correction-value specifying section 138 specifies a correction value AM according to the supplied resource allocation information AL (step S120). The correction-value reporting section 140 reports the specified correction value AM to the user equipment 300 through the radio communication section 110 (step S130).

The correction value AM is used to correct the characteristic value R2 that indicates the reception power (reception characteristic) of radio waves received by the user equipment 300 from the pico base station 200. The correction value AM can be specified in any manner. For example, it is preferable that the correction value AM be specified higher (that is, the area of the pico cell Cp be expanded) as the number of the protected sub-frames PSF indicated by the resource allocation information AL increases (that is, as the period (resource) in which the macro base station 100 sends a radio signal becomes shorter).

The characteristic-value measuring section 332 of the user equipment 300 measures the reception power of radio waves sent from each base station (the macro base station 100, the pico station 200) and received by the radio communication section 310 to obtain a characteristic value R1 and a characteristic value R2 (step S140).

Then, the characteristic-value correcting section 334 of the user equipment 300 corrects the reception power (characteristic value R2) of radio waves from the pico base station 200 with the correction value AM. More specifically, the characteristic-value correcting section 334 adds the correction value AM to the characteristic value R2, acquired when the reception power of the radio waves received from the pico base station 200 is measured, to obtain a corrected characteristic value R2' (R2' = R2 + AM) (step S150). As shown in Fig. 16, the characteristic value R2 in the user equipment 300 is offset with the correction value AM to become the corrected characteristic value R2', for the pico base station 200.

It is assumed here that the characteristic value R1 corresponding to the macro base station 100 is equal to the corrected characteristic value R2' corresponding to the pico base station 200 at a position L1 (see Fig. 16). It is also assumed that the user equipment 300 is located at the position Lu, which is between the position L1 and the position L2 (position where the characteristic value R1 is equal to the characteristic value R2, which is not corrected). At the position Lu, the actual reception power (characteristic value R1) from the macro base station 100 is higher than the actual reception power (characteristic value R2) from the pico base station 200 (R1 > R2), but the corrected characteristic value R2' corresponding to the pico base station 200 is larger than the characteristic value R1 corresponding to the macro base station 100 (R1 < R2'(= R2 + AM)).

The characteristic value R1 from the characteristic-value measuring section 332 and the corrected characteristic value R2' from the characteristic-value correcting section 334 are sent to the characteristic-value reporting section 336. The characteristic-value reporting section 336 reports (sends) the characteristic values R (R1 and R2') to the macro base station 100 through the radio communication section 310 (step S160).

The destination selecting section 142 of the macro base station 100 selects, as the radio connection destination of the user equipment 300, a base station providing the highest reception power, that is, a base station corresponding to the characteristic value R indicating the best reception characteristic among the characteristic values R (R1 and R2') reported from the characteristic-value reporting section 336 of the user equipment 300 (step S170).

As described before, in the present embodiment, since the user equipment 300 is located at the position Lu, the characteristic value R2' indicates the highest reception power (R2' > R1). Therefore, the destination selecting section 142 of the macro base station 100 selects the pico base station 200 (pico cell Cp) corresponding to the characteristic value R2' as the radio connection destination of the user equipment 300.

The destination selecting section 142 reports destination cell information T indicating the selected radio connection destination to the user equipment 300 through the radio communication section 110 (step S180).

In step S190, the connection section 338 of the user equipment 300 executes a connection operation for connecting to the destination cell indicated by the destination cell information T received from the macro base station 100 (or continues the connection if the user equipment 300 has already connected to the destination cell indicated by the destination cell information T). For example, when the user equipment 300 is connected to the macro cell Cm, if the connection section 338 receives destination cell information T specifying the pico cell Cp as the destination, the connection section 338 connects (off-loads) the user equipment 300 to the specified pico cell Cp.

As understood from the foregoing description, in particular, from the descriptions of step S150 and step S170, the correction of the characteristic value R2 (the increase by the correction value AM) in the characteristic-value correcting section 334 increases the apparent reception power from the pico base station 200 at each user equipment 300 to expand the area of the pico cell Cp formed by the pico base station 200.

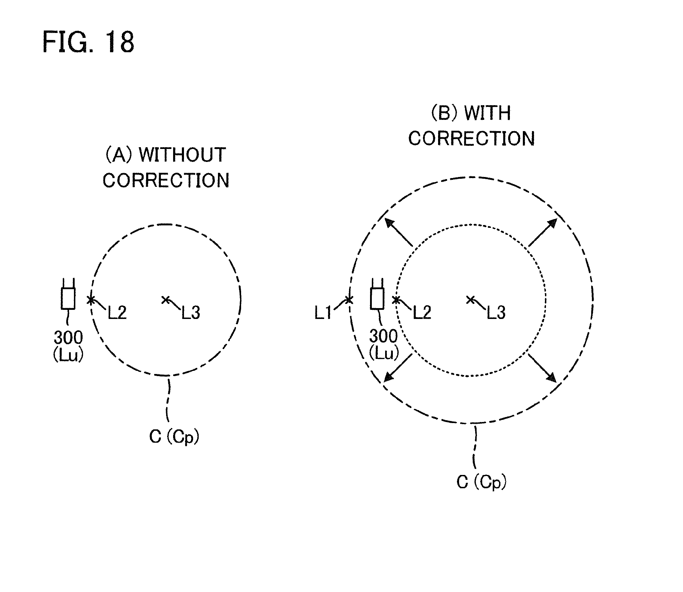

Fig. 18 includes views showing a change in the area of the pico cell Cp, caused by the correction with the correction value AM, and corresponds to Fig. 16. Without correction (Fig. 18(A)), since the pico cell Cp formed by a pico base station 200, not shown, disposed at the position L3 has an area in which the characteristic value R2 corresponding to the pico base station 200 exceeds the characteristic value R1 corresponding to the macro base station 100 (area that includes the position L2 as a point on the boundary), the position Lu, where the user equipment 300 is located (position closer to the macro base station 100 than the position L2 is), is outside the pico cell Cp. In contrast, with the correction (Fig. 18(B)), since the pico cell Cp has an area in which the corrected characteristic value R2' corresponding to the pico base station 200 exceeds the characteristic value R1 corresponding to the macro base station 100 (area that includes the position L1 as a point on the boundary), the position Lu, where the user equipment 300 is located (position closer to the pico base station 200 than the position L1 is), is inside the pico cell Cp. As described above, the correction with the correction value AM expands the area of the pico cell Cp.

According to the configuration described above, since the destination of each user equipment 300 is selected according to the corrected characteristic value R2', obtained by correcting, with the correction value AM, the characteristic value R2, indicating the reception power of radio waves received from the pico base station 200, the area of the pico cell Cp is expanded and the number of user equipments 300 connected (off-loaded) to the pico base stations 200 is increased, compared with a case in which such a correction is not made (that is, a case in which the destination is selected simply according to the reception power of radio waves from each base station). In addition, since the correction value AM is specified according to the resource allocation information AL specified by the resource specifying section 134 (that is, according to ICIC resource control), the area of the pico cell Cp is made more appropriate.

### Sixth embodiment

In the fifth embodiment, the correction value AM is specified according to resource allocation information AL to change the area of the pico cell Cp. In a sixth embodiment, resource allocation information AL is specified after the user equipment 300 is connected to a radio connection destination selected according to the area of the pico cell Cp changed according to a correction value AM.

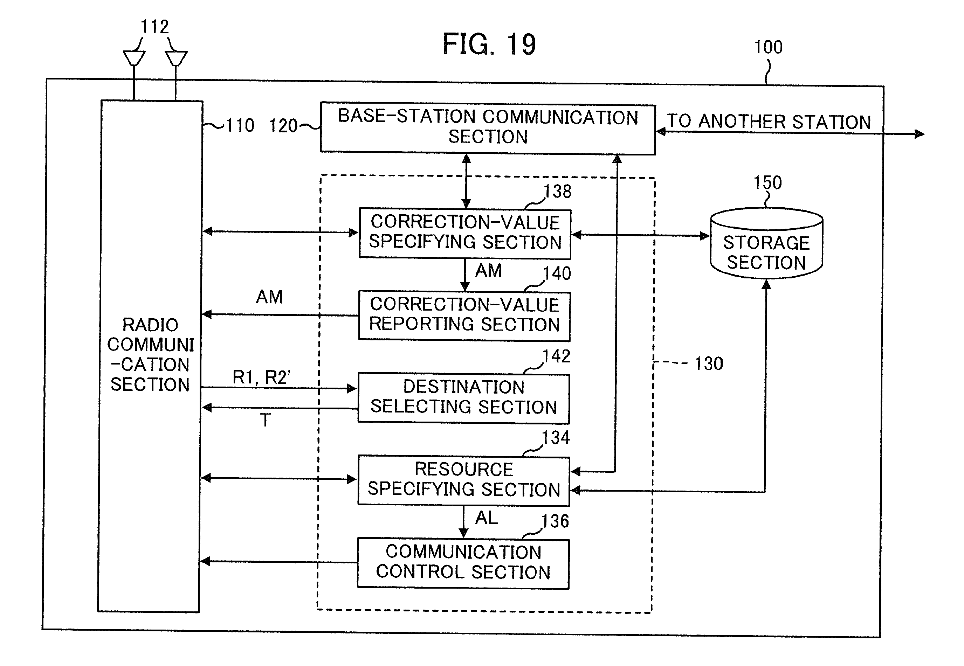

Fig. 19 is a block diagram showing the configuration of a macro base station 100 according to the sixth embodiment of the present invention. Since the configuration of the macro base station 100 according to the sixth embodiment is similar in general to the configuration of the macro base station 100 according to the fifth embodiment shown in Fig. 15, only the differences therefrom will be described below.

In the fifth embodiment, the resource allocation information AL is supplied from the communication control section 136 to the correction-value specifying section 138. In the sixth embodiment, information about at least one of the states of the macro base station 100 and each pico base station 200 is supplied from at least one of the radio communication section 110, the base-station communication section 120, and the storage section 150 to the correction-value specifying section 138. The information supplied to the correction-value specifying section 138 includes, for example, the amount of traffic of the macro base station 100 or the pico base station 200, the number of user equipments 300 connected by radio to the macro base station 100 or the pico base station 200, and the distance between the macro base station 100 and each pico base station 200.

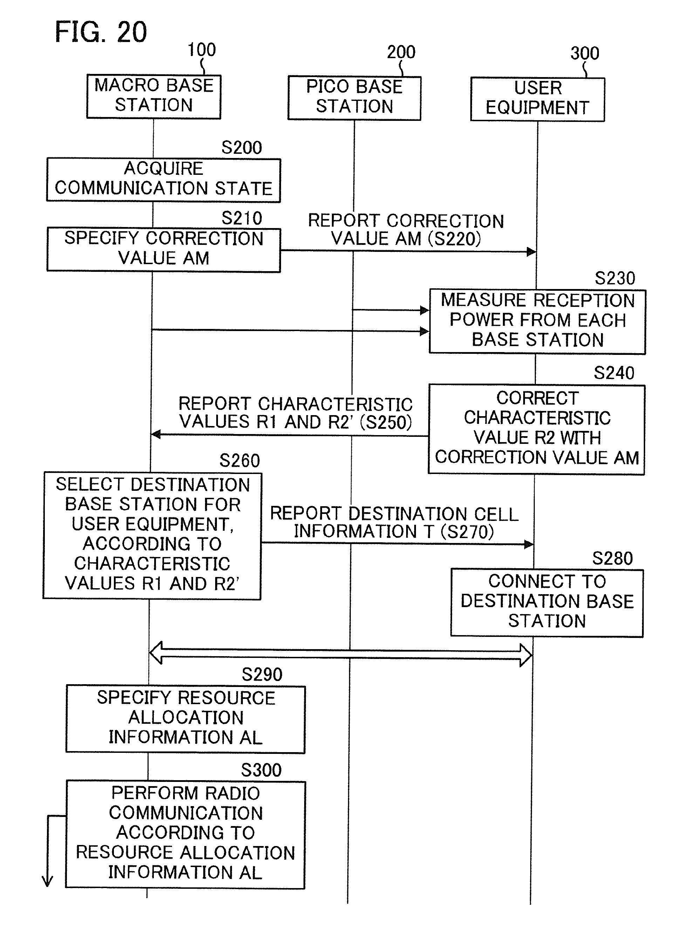

The operation flow of how a reception characteristic (reception power) is corrected and how resource allocation information AL is specified according to the sixth embodiment of the present invention will be described with reference to Fig. 20. The operation principle of how the reception characteristic (reception power) is corrected is as described earlier in the fifth embodiment.

The correction-value specifying section 138 of the macro base station 100 acquires information about at least one of the states of the macro base station 100 and each pico base station 200 (step S200). The correction-value specifying section 138 specifies a correction value AM according to the acquired state information (step S210). The correction-value reporting section 140 reports the specified correction value AM to the user equipment 300 through the radio communication section 110 (step S220).

The correction value AM can be specified in any manner. For example, a means can be employed in which the correction value AM is specified higher (that is, the area of the pico cell Cp is expanded) as the number of user equipments 300 connected by radio to each pico base station 200 increase.

Then, reception-power measurement and correction with the correction value AM, selection of a radio base station serving as a radio connection destination, and connection to the new radio connection destination are executed (step S230 to step S280) in the same way as in step S140 to step S190 in the fifth embodiment. As a result, the radio base station to which each user equipment 300 located in the macro cell Cm formed by the macro base station 100 is connected by radio can be changed before and after the above-described operations (step S200 to step S280). Therefore, before and after the above-described operations, the parameters (such as the amount of traffic of each base station and the number of user equipments 300 being connected to each base station) contributing to specifying the resource allocation information AL can also be changed.

After step S280, the resource specifying section 134 of the macro base station 100 specifies resource allocation information AL according to one of the embodiments described earlier (step S290). The communication control section 136 of the macro base station 100 controls the radio communication section 110 according to the resource allocation information AL supplied from the resource specifying section 134 (step S300). The radio communication section 110 of the macro base station 100 starts radio communication according to the resource allocation information AL.

In the configuration described above, after the radio connection destination of the user equipment 300 is selected according to the reception power corrected by using the correction value AM, the resource specifying section 134 of the macro base station 100 specifies the resource allocation information AL. Therefore, the change in the area of the pico cell Cp made with the correction value AM can be reflected in specifying the resource allocation information AL. Consequently, sub-frames SF are allocated (in other words, resource control is performed with ICIC) more appropriately.

### Seventh embodiment

In the above-described embodiments, the numbers of protected sub-frames PSF and non-protected sub-frames NSF in each radio frame F are decided according to various parameters (such as the amount of traffic of the macro base station 100). A seventh embodiment shows an example of how protected sub-frames PSF and non-protected sub-frames NSF are placed in each radio frame F.

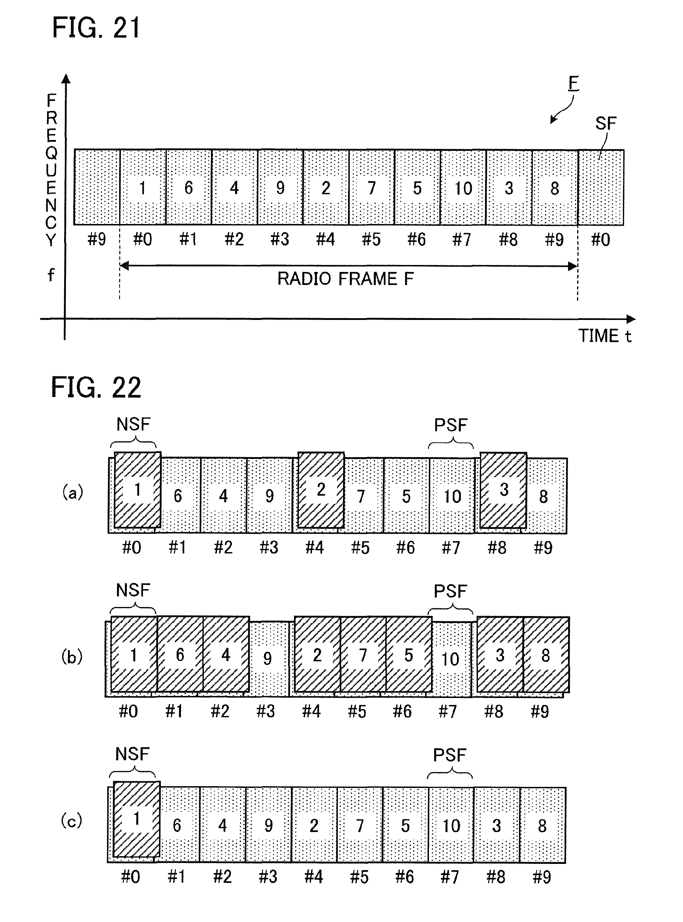

Fig. 21 is a view showing an example case of priority order given to sub-frames SF in a radio frame F. As shown in the figure, unique priority numbers are assigned to the sub-frames SF (sub-frame SF#0 has the first order, sub-frame SF#4 has the second order, ..., sub-frame SF#7 has the tenth order). Priority order information P indicating the priority numbers described above is stored in the storage section 150 of the macro base station 100 and is supplied to the resource specifying section 134 when resource allocation information AL is specified.

The resource specifying section 134 of the macro base station 100 according to the seventh embodiment places non-protected sub-frames NSF according to the priority numbers indicated by the priority order information P. Specific placement examples are shown in Fig. 22. Fig. 22(a) is a view showing the placement of sub-frames SF when the resource specifying section 134 determines, according to a parameter such as the amount of traffic, that three sub-frames SF in each radio frame F should be non-protected sub-frames. The resource specifying section 134 selects three sub-frames SF according to the priority order information P (sub-frame SF#0 having the first priority number, sub-frame SF#4 having the second priority number, and sub-frame SF#8 having the third priority number) and specifies resource allocation information AL such that the three selected sub-frames SF are non-protected sub-frames NSF.

In the same manner, Fig. 22(b) shows, as an example, the placement of sub-frames SF when one sub-frame SF should be a non-protected sub-frame, and Fig. 22(c) shows, as an example, the placement of sub-frames SF when eight sub-frames SF should be non-protected sub-frames. As shown in the figures, the resource specifying section 134 specifies the placement of non-protected sub-frames NSF according to the priority numbers indicated by the priority order information P.

In the above-described configuration, it is preferable that the pico base station 200 select sub-frames SF according to the reverse order of the priority order indicated by the priority order information P and execute radio communication with the user equipment 300 by using the selected sub-frames SF.

As described earlier, it is more likely that the macro base station 100 sends a radio signal by using sub-frames SF having higher priority and it is less likely that the macro base station 100 sends a radio signal by using sub-frames SF having lower priority. Therefore, when the pico base station 200 executes radio communication with sub-frames SF selected according to the reverse order of the priority order, the pico base station 200 can send a radio signal in a period (resource) in which it is more likely that interference from the macro base station 100 is low.

### Eighth embodiment

In the above-described embodiments, the communication control section 136 of the radio communication section 110 controls the radio communication section 110 such that the transmission of a radio signal is alternately executed and stopped every predetermined time length (every sub-frame SF) according to a parameter (such as the amount of traffic) that affects at least one of the amount of communication in the macro base station 100 and the amount of communication in the pico base station 200. In an eighth embodiment, the communication control section 136 of the radio communication section 110 controls the radio communication section 110 such that the transmission of a radio signal is alternately executed and stopped every predetermined frequency bandwidth (every sub-carrier SC) according to the same parameter.

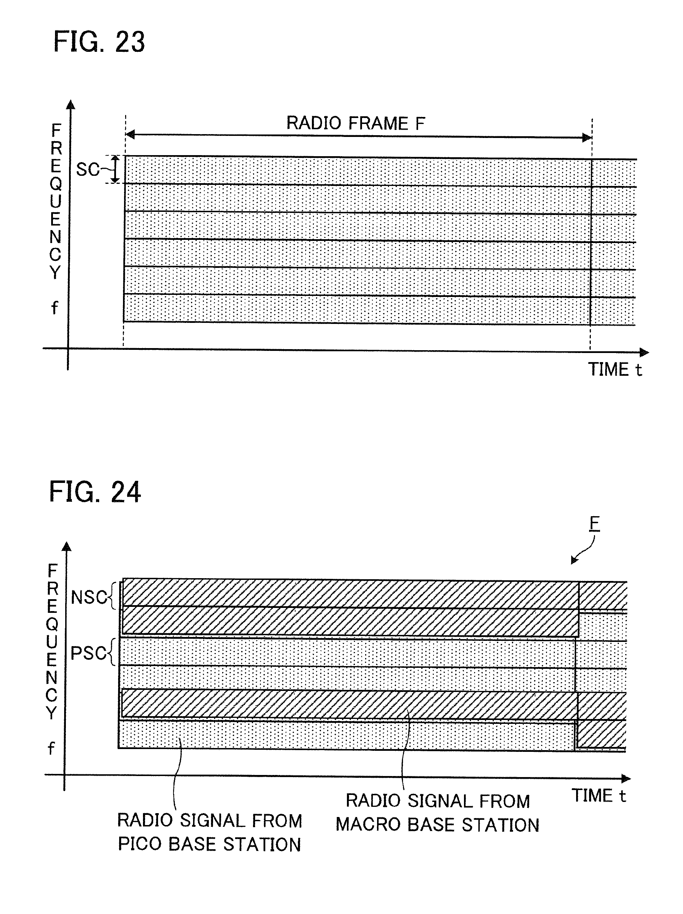

Fig. 23 is a view showing the format of a radio frame F transceived between communication elements in a radio communication system 1, from a different viewpoint from that in Fig. 5. As described earlier, the radio frame F occupies the predetermined time length and the predetermined bandwidth. The radio frame F includes a plurality of sub-carriers SC in the frequency domain. The sub-carrier SC is a transmission unit occupying a frequency band (for example, 15 kHz) narrower than that occupied by the radio frame F. Only six sub-carriers SC are shown in the figure, but it is understood as a matter of course that any number of sub-carriers SC may be included in the radio frame F.

To indicate that the plurality of sub-carriers SC are orthogonal to each other in the frequency domain, the sub-carriers SC do not overlap with each other in Fig. 23. In an actual case, the plurality of sub-carriers SC (in particular, sub-carriers SC having close central frequencies) can overlap with each other in at least some bands.

Fig. 23 does not explicitly show sub-frames SF such as those shown in Fig. 5, but this does not mean that the radio frame F in the eighth embodiment does not have sub-frames SF. Since attention is focused on sub-carriers SC, serving as the transmission unit in the frequency domain, in Fig. 23, sub-frames SF are not shown in the figure.

Fig. 24 is an outline view of inter-cell interference coordination according to the eighth embodiment of the present invention. The communication control section 136 of the radio communication section 110 controls the radio communication section 110 such that the transmission of a radio signal is alternately executed and stopped every sub-carrier SC. A sub-carrier SC in which the transmission of a radio signal from the macro base station 100 is stopped is called a protected sub-carrier PSC because a radio signal from the pico base station 200 is protected from interference caused by the macro base station 100, and a sub-carrier SC in which the transmission of a radio signal from the macro base station 100 is executed is called a non-protected sub-carrier NSC.

On the other hand, the radio communication section 210 of the pico base station 200 can send a radio signal to the user equipment 300 in all bands in the radio frame F, that is, in both non-protected sub-carriers NSC and protected sub-carriers PSC.

In protected sub-carriers PSC, where the radio communication section 110 of the macro base station 100 does not send a radio signal, only the radio communication section 210 of the pico base station 200 sends a radio signal. Therefore, in protected sub-carriers PSC, a user equipment 300 located in both the macro cell Cm formed by the macro base station 110 and the pico cell Cp formed by the pico base station 200 can receive a radio signal from the pico base station 200 with higher quality because a radio signal from the macro base station 100 does not interfere with the radio signal from the pico base station 200.

In Fig. 24, the communication control section 136 alternately executes and stops transmission every sub-carrier SC. The communication control section 136 may alternately execute and stop transmission in units of a plurality of sub-carriers SC. In the above-described configuration, since many sub-carriers SC can be controlled as sets, the configuration is simpler than in a case in which control is made every sub-carrier SC.

In the same way as in the seventh embodiment, it is preferable that unique priority numbers be assigned to the plurality of sub-carriers SC in each radio frame F and that the resource specifying section 134 place non-protected sub-carriers NSC according to the priority numbers (that is, the priority order information P).

In the above-described configuration, it is preferable that the pico base station 200 select sub-carriers SC according to the reverse order of the above-described priority order and execute radio communication with the user equipment 300 by using the selected sub-carriers SC. It is more likely that the macro base station 100 sends a radio signal by using sub-carriers SC having higher priority and it is less likely that the macro base station 100 sends a radio signal by using sub-carriers SC having lower priority. Therefore, when the pico base station 200 executes radio communication with sub-carriers SC selected according to the reverse order of the priority order, the pico base station 200 can send a radio signal in a bandwidth in which it is more likely that interference from the macro base station 100 is low.

### Ninth embodiment

In the above-described embodiments, the communication control section 136 of the radio communication section 110 controls the radio communication section 110 such that the transmission of a radio signal is alternately executed and stopped every predetermined time length (every sub-frame SF) or every predetermined frequency bandwidth (every sub-carrier SC). In a ninth embodiment, the communication control section 136 controls the radio communication section 110 such that the transmission of a radio signal is alternately executed and stopped every predetermined time length and every predetermined frequency bandwidth.

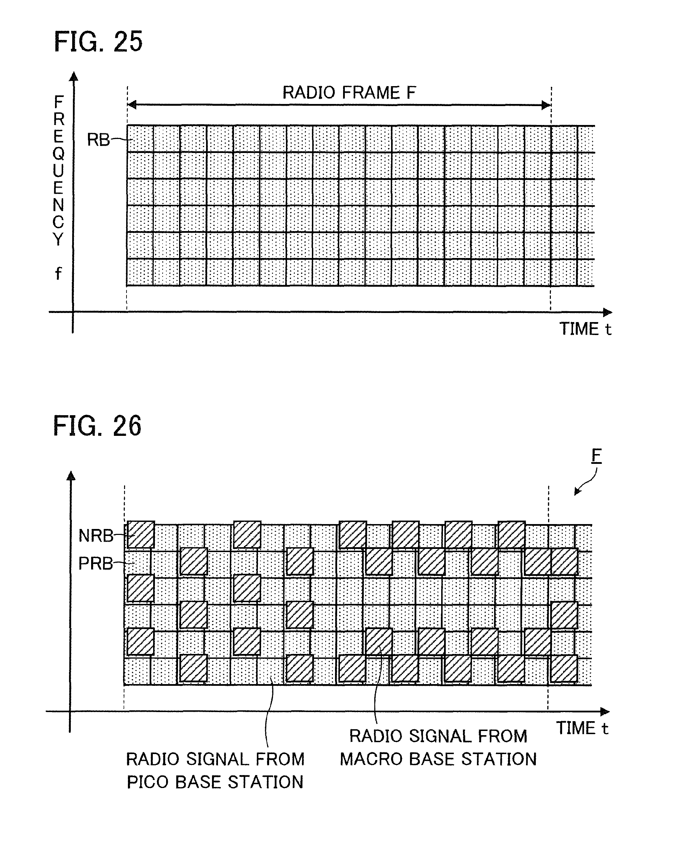

Fig. 25 is a view showing the format of a radio frame F transceived between communication elements in a radio communication system 1, from a different viewpoint from those in Fig. 5 and Fig. 23. As described earlier, the radio frame F occupies the predetermined time length and the predetermined bandwidth. The radio frame F includes a plurality of resource blocks RB. The resource block is a transmission unit that occupies a time length (for example, 1 ms) shorter than that occupied by the radio frame F and a frequency band (for example, 180 kHz) narrower than that occupied by the radio frame F. One radio frame F includes 96 resource blocks RB in the figure, but it is understood as a matter of course that one radio frame F may include any number of resource blocks RB.

Fig. 25 does not explicitly show sub-frames SF such as those shown in Fig. 5 or sub-carriers SC such as those shown in Fig. 23, but this does not mean that the radio frame F in the ninth embodiment does not have sub-frames SF or sub-carriers SC. Since attention is focused on resource blocks RB, serving as the transmission unit having the predetermined time length and the predetermined frequency band, in Fig. 25, sub-frames SF and sub-carriers SC are omitted from the figure, if unnecessary.

Fig. 26 is an outline view of inter-cell interference coordination according to the ninth embodiment of the present invention. The communication control section 136 of the radio communication section 110 controls the radio communication section 110 such that the transmission of a radio signal is alternately executed and stopped every resource block RB. A resource block RB in which the transmission of a radio signal from the macro base station 100 is stopped is called a protected resource block PRB because a radio signal from the pico base station 200 is protected from interference caused by the macro base station 100, and a resource block RB in which the transmission of a radio signal from the macro base station 100 is executed is called a non-protected resource block NRB.

On the other hand, the radio communication section 210 of the pico base station 200 can send a radio signal to the user equipment 300 in all resource blocks in the radio frame F, that is, in both non-protected resource blocks NRB and protected resource blocks PRB.

In protected resource blocks PRB, where the radio communication section 110 of the macro base station 100 does not send a radio signal, only the radio communication section 210 of the pico base station 200 sends a radio signal. Therefore, in protected resource blocks PRB, a user equipment 300 located in both the macro cell Cm formed by the macro base station 110 and the pico cell Cp formed by the pico base station 200 can receive a radio signal from the pico base station 200 with higher quality because a radio signal from the macro base station 100 does not interfere with the radio signal from the pico base station 200.

In Fig. 26, the communication control section 136 alternately executes and stops transmission every resource block RB. The communication control section 136 may alternately execute and stop transmission in units of a plurality of resource blocks RB. In the above-described configuration, since many resource blocks RB can be controlled as sets, the configuration is simpler than in a case in which control is made every resource block RB.

In the same way as in the seventh embodiment, it is preferable that unique priority numbers be assigned to the plurality of resource blocks RB in each radio frame F and that the resource specifying section 134 place non-protected resource blocks NRB according to the priority numbers (that is, the priority order information P).

In the above-described configuration, it is preferable that the pico base station 200 select resource blocks RB according to the reverse order of the above-described priority order and execute radio communication with the user equipment 300 by using the selected resource blocks. It is more likely that the macro base station 100 sends a radio signal by using resource blocks RB having higher priority and it is less likely that the macro base station 100 sends a radio signal by using resource blocks RB having lower priority. Therefore, when the pico base station 200 executes radio communication with resource blocks RB selected according to the reverse order of the priority order, the pico base station 200 can send a radio signal in resources in which it is more likely that interference from the macro base station 100 is low.

### Modifications

The embodiments described above can be modified in various ways. Specific example modifications will be described below. Two or more of the foregoing embodiments and the following modifications selected in a desired manner can be appropriately combined so long as no mutual contradiction occurs.

### Modification 1

In each configuration in the third embodiment, the resource specifying section 134 of the macro base station 100 specifies the resource allocation information AL according to the amounts of traffic of user equipments 300 connected by radio to pico base stations 200. Instead, the resource specifying section 134 of the macro base station 100 may specify the resource allocation information AL according to the number of user equipments 300 connected by radio to the pico base stations 200. In other words, the resource allocation information AL may be specified such that, the larger the number of user equipments 300 connected by radio to the pico base stations 200 (preferably, the larger the number of user equipments 300 connected by radio to pico base stations 200 whose distance from the macro base station is larger than the threshold "d"), the larger the number of protected sub-frames PSF in each radio frame F.

### Modification 2

It is also possible to employ a configuration in which the number of pico cells Cp in the macro cell Cm is dynamically changed. In other words, during the operation of the macro base station 100, a pico base station 200 may be added to or removed from the macro base station 100 according to necessity.

### Modification 3

In the above-described embodiments, the reception characteristic of radio waves is the reception power (reference signal received power, RSRP). The reception characteristic may be the signal to interference-and-noise ratio (SINR), the reference signal received quality (RSRQ), or the like. When the reception characteristic is expressed as a ratio, such as the SINR, the characteristic value R of the reception characteristic may be multiplied by a correction value AM to calculate the corrected characteristic value R' (R' = R · A). When the reception characteristic is expressed in dB (logarithm of a ratio), a correction value expressed in dB may be added to the characteristic value R expressed in dB to calculate the characteristic value R'. It is understood as a matter of course that this is merely one type of case in which the characteristic value R is multiplied by a correction value AM.

### Modification 4

In the above-described embodiments, when the characteristic values R (such as the reception power) are larger, the reception state is better. Another characteristic value R may be used, which indicates a better reception state when it is smaller. For example, the reciprocal of a value indicating the reception power may be used as a characteristic value R. In that case, a base station corresponding to a smaller characteristic value R is selected by the destination selecting section 142 as the radio connection destination of the user equipment 300. The characteristic-value correcting section 334 may subtract a correction value AM from the characteristic value R or may divide the characteristic value R by a correction value AM to calculate the corrected characteristic value R'.

### Modification 5

In the above-described embodiments, the pico base stations 200 are used as examples of base stations having a lower transmission capability than the macro base station 100. A micro base station, a nano base station, a femto base station, a remote radio head, or the like may be used as a base station having a lower transmission capability.

In particular, as an element of the radio communication system 1, a combination of a plurality of base stations having different transmission capabilities (for example, a combination of a macro base station, a pico base station, and a femto base station) may be employed. In that case, it is preferable that the correction value AM be determined independently according to the transmission capability of each base station (for example, that a correction value AM1 determined for the pico base station be different from a correction value AM2 determined for the femto base station).

### Modification 6

In the above-described embodiments, the macro base station 100 (destination selecting section 142) selects the destination of each user equipment 300 according to the characteristic values R (R1 and R2) reported from the user equipment 300. A destination selection section provided in the controller 330 of each user equipment 300 may select the destination according to the characteristic values R (R1 and R2) obtained by the user equipment 300 itself.

### Modification 7

The user equipments 300 are devices capable of communicating with each base station (macro base station 100, pico base station 200) by radio. For example, the user equipments 300 may be portable telephone terminals, such as feature phones or smart phones, desktop personal computers, notebook personal computers, ultra-mobile personal computers (UMPC), portable game machines, embedded communication modules, or other radio terminals.

### Modification 8

The functions executed by the CPU in each element (macro base station 100, pico base stations 200, and user equipments 300) in the radio communication system 1 may be executed by hardware instead of the CPU, or may be executed by a programmable logic device, such as a field programmable gate array (FPGA) or a digital signal processor (DSP).

### Reference Numerals

1: Radio communication system
100: Macro base station
110: Radio communication section
112: Transmission and reception antennas
120: Base-station communication section
130: Controller
134: Resource specifying section
136: Communication control section
138: Correction-value specifying section
140: Correction-value reporting section
142: Destination selecting section
150: Storage section
200: Pico base station
210: Radio communication section
212: Transmission and reception antennas
220: Base-station communication section
230: Controller
300: User equipment
310: Radio communication section
312: Transmission and reception antennas
330: Controller
332: Characteristic-value measuring section
334: Characteristic-value correcting section
336: Characteristic-value reporting section
338: Connection section
AL: Resource allocation information
AM: Correction value
C: Cell
Cm: Macro cell
Cp: Pico cell
d: Threshold
F: Radio frame
L: Position
P: Priority order information
R: Characteristic value
RA: Range
SF: Sub-frame (NSF: Non-protected sub-frame, PSF: Protected sub-frame)
T: Destination cell information

## Claims

1. A radio communication system comprising:
a first radio base station that forms a first cell;
a plurality of second radio base stations each of which is connected to the first radio base station and forms, in the first cell formed by the first radio base station to be connected, a second cell having a smaller area than the first cell; and
a plurality of mobile stations each of which comprises a radio communication section that establishes a radio connection to at least one of the first radio base station and a second radio base station corresponding to resident cells where the mobile station is located among the first cell the second cells to execute radio communication;
the first radio base station comprising:
a radio communication section capable of executing radio communication synchronously with each of the second radio base stations forming the second cells in the first cell formed by the first radio base station;
a resource specifying section that specifies, according to a parameter that affects the amount of communication of at least one of the first radio base station and the second radio base station, a number and placement of first resources in which the radio communication section should execute radio communication and a number and placement of second sources in which the radio communication section should stop radio communication, the first resources and the second resources being included in unit resources occupying at least one of a predetermined time length and a predetermined frequency bandwidth; and
a communication control section that controls the radio communication section such that the radio communication section executes radio communication in the first resources specified by the resource specifying section, and such that the radio communication section stops radio communication in the second resources specified by the resource specifying section.

2. The radio communication system according to Claim 1,
wherein each of the mobile stations further comprises a characteristic-value measuring section that measures a reception characteristic value of a radio signal sent from each of the first radio base station and the second radio base station corresponding to the resident cells,
the first radio base station further comprises:
a correction-value specifying section that specifies, according to the number and the placement of the first resources and the number and the placement of the second resources specified by the resource specifying section in the unit resources, a correction value used to correct the reception characteristic value of the radio signal sent from the second radio base station and received by the mobile station; and
a correction-value reporting section that reports the correction value specified by the correction-value specifying section to the mobile station;
each of the mobile stations further comprises a characteristic-value correction section that corrects the reception characteristic value of the radio signal sent from the second radio base station, the reception characteristic value being measured by the characteristic-value measuring section, by using the correction value reported from the correction-value reporting section of the first radio base station; and
the first radio base station or the mobile station selects the first radio base station or the second radio base station, whichever has the best reception characteristic value, as a radio connection destination of the mobile station.

3. The radio communication system according to Claim 1,
wherein each of the mobile stations further comprises a characteristic-value measuring section that measures a reception characteristic value of a radio signal sent from each of the first radio base station and the second radio base station corresponding to the resident cells,
the first radio base station further comprises:
a correction-value specifying section that specifies, according to at least one of the states of the first radio base station and the second radio base station, a correction value used to correct the reception characteristic value of the radio signal sent from the second radio base station and received by the mobile station; and
a correction-value reporting section that reports the correction value specified by the correction-value specifying section to the mobile station;
each of the mobile stations further comprises a characteristic-value correction section that corrects the reception characteristic value of the radio signal sent from the second radio base station, the reception characteristic value being measured by the characteristic-value measuring section, by using the correction value reported from the correction-value reporting section of the first radio base station; and
after the first radio base station or the mobile station selects the first radio base station or the second radio base station, whichever has the best reception characteristic value, as a radio connection destination of the mobile station, the resource specifying section of the first radio base station specifies the number and the placement of the first resources and the number and the placement of the second resources in predetermined unit resources according to a parameter that affects at least one of the amount of communication in the first radio base station and the amount of communication in the second radio base station.

4. The radio communication system according to Claim 1, wherein the resource specifying section of the first radio base station specifies a larger number of the second resources in the unit resources as the communication load of the first radio base station decreases.

5. The radio communication system according to Claim 1, wherein the resource specifying section of the first radio base station specifies a larger number of the second resources in the unit resources as a number of mobile stations connected by radio to the first radio base station decreases.

6. The radio communication system according to Claim 1, wherein the resource specifying section of the first radio base station specifies a larger number of the second resources in the unit resources as a number of mobile stations connected by radio to the first radio base station and having an amount of communication exceeding a predetermined threshold decreases.

7. The radio communication system according to Claim 1, wherein the resource specifying section of the first radio base station specifies a larger number of the second resources in the unit resources as a number of second cells formed in the first cell formed by the first radio base station increases.

8. The radio communication system according to Claim 1, wherein the resource specifying section of the first radio base station specifies a larger number of the second resources in the unit resources as a number of the second cells formed in the first cell formed by the first radio base station and corresponding to second base stations connected by radio to one or more mobile stations increases.

9. The radio communication system according to Claim 1, wherein the resource specifying section of the first radio base station specifies a larger number of the second resources in the unit resources as the amounts of communication of mobile stations connected by radio to the second radio base stations corresponding to the second cells formed in the first cell formed by the first radio base station increase.

10. The radio communication system according to Claim 1, wherein the resource specifying section of the first radio base station specifies a larger number of the second resources in the unit resources as the amounts of communication of mobile stations connected by radio to second radio base stations that correspond to the second cells formed in the first cell formed by the first radio base station and that have distances from the first radio base station exceeding a predetermined threshold increase.

11. The radio communication system according to Claim 1, wherein the resource specifying section of the first radio base station specifies a larger number of the second resources in the unit resources as a number of mobile stations connected by radio to the second radio base stations corresponding to the second cells formed in the first cell formed by the first radio base station increases.

12. The radio communication system according to Claim 1, wherein the resource specifying section of the first radio base station specifies a larger number of the second resources in the unit resources as a number of mobile stations connected by radio to second radio base stations that correspond to the second cells formed in the first cell formed by the first radio base station and that have distances from the first radio base station exceeding a predetermined threshold increases.

13. The radio communication system according to Claim 1, wherein the resource specifying section of the first radio base station specifies a larger number of the second resources in the unit resources as a number of second radio base stations located in an area having a distance from the first radio base station smaller than a predetermined threshold within the first cell formed by the first radio base station increases.

14. The radio communication system according to Claim 1, wherein the resource specifying section of the first radio base station specifies a larger number of the second resources in the unit resources in a case in which one or more second radio base stations are located in an area having a distance from the first radio base station smaller than a predetermined threshold within the first cell formed by the first radio base station than in a case in which no second radio base station is located in the area.

15. The radio communication system according to Claim 1,
wherein, in the first radio base station, the unit resources include a plurality of lower unit resources each corresponding to one or both of a predetermined time length and a predetermined frequency bandwidth;
unique priority numbers are assigned to the plurality of lower unit resources respectively; and
the resource specifying section of the first radio base station places the first unit resources according to the priority numbers.

16. The radio communication system according to Claim 15, wherein the second radio base station selects the lower unit resources according to the reverse order of the priority numbers in the first radio base station to which the second radio base station is connected and executes radio communication with the mobile station by using the selected lower unit resources.

17. A first radio base station that forms a first cell in a radio communication system provided with the first radio base station; a plurality of second radio base stations each of which is connected to the first radio base station and forms, in the first cell formed by the first radio base station to be connected, a second cell having a smaller area than the first cell; and a plurality of mobile stations each of which is provided with a radio communication section that establishes a radio connection to at least one of the first radio base station and the second radio base station corresponding to resident cells where the mobile station is located among the first cell and the second cells to execute radio communication;
the radio base station comprising:
a radio communication section capable of executing radio communication synchronously with each of the second radio base stations forming the second cells in the first cell formed by the first radio base station;
a resource specifying section that specifies, according to a parameter that affects the amount of communication of at least one of the first radio base station and the second radio base station, a number and placement of first resources in which the radio communication section should execute radio communication and a number and placement of second sources in which the radio communication section should stop radio communication, the first resources and the second resources being included in unit resources occupying at least one of a predetermined time length and a predetermined frequency bandwidth; and
a communication control section that controls the radio communication section such that the radio communication section executes radio communication in the first resources specified by the resource specifying section, and such that the radio communication section stops radio communication in the second resources specified by the resource specifying section.

18. A communication control method for a radio communication system provided with a first radio base station that forms a first cell; a plurality of second radio base stations each of which is connected to the first radio base station and forms, in the first cell formed by the first radio base station to be connected, a second cell having a smaller area than the first cell; and a plurality of mobile stations each of which is provided with a radio communication section that establishes a radio connection to at least one of the first radio base station and the second radio base station corresponding to resident cells where the mobile station is located among the first cell and the second cells to execute radio communication;
the communication control method comprising:
executing radio communication synchronously with each of the second radio base stations forming the second cells in the first cell formed by the first radio base station;
specifying, according to a parameter that affects the amount of communication of at least one of the first radio base station and the second radio base station, a number and placement of first resources in which the radio communication section should execute radio communication and a number and placement of second sources in which the radio communication section should stop radio communication, the first resources and the second resources being included in unit resources occupying at least one of a predetermined time length and a predetermined frequency bandwidth; and
controlling the radio communication section such that the radio communication section executes radio communication in the first resources specified by the resource specifying section, and such that the radio communication section stops radio communication in the second resources specified by the resource specifying section.
